# EUROPÄISCHE PATENTSCHRIFT

(11) **EP 2 567 295 B1**
(45) Veröffentlichungstag und Bekanntmachung des Hinweises auf die Patenterteilung: **28.10.2015**
(21) Anmeldenummer: 10725595.2
(22) Anmeldetag: 03.05.2010
(51) Int. Cl.: G05B 19/05

(54) **VERFAHREN ZUM SELEKTIVEN AUFZEICHNEN, REKONSTRUIEREN UND ANALYSIEREN DES PROGRAMMLAUFS EINES STEUERUNGSPROGRAMMS**
METHOD FOR SELECTIVLY RECORDING, RECONSTRUCTING AND ANALYSING THE EXECUTION OF A CONTROL PROGRAM
PROCÉDÉ POUR ENREGISTRER, RECONSTRUIRE ET ANALYSER DE MANIÈRE SÉLECTIVE L'EXECUTION D'UN PROGRAMME DE CONTRÔLE

(43) Veröffentlichungstag der Anmeldung: 13.03.2013
(73) Patentinhaber: KEBA AG, 4041 Linz (AT)
(72) Erfinder: PRÄHOFER, Herbert, A-4040 Linz (AT); SCHATZ, Roland, A-4331 Naarn (AT); WIRTH, Christian, A-4061 Pasching (AT)
(74) Vertreter: Burger, Hannes
(86) Internationale Anmeldenummer: PCT/AT2010/000143
(87) Internationale Veröffentlichungsnummer: WO 2011/137464

(56) Entgegenhaltungen:
- US-A1- 2009 235 262
- NARAYANASAMY S ET AL: "BugNet: Continuously Recording Program Execution for Deterministic Replay Debugging", COMPUTER ARCHITECTURE, 2005. ISCA '05. PROCEEDINGS. 32ND INTERNATIONAL SYMPOSIUM ON MADISON, WI, USA 04-08 JUNE 2005, PISCATAWAY, NJ, USA,IEEE, 4. Juni 2005 (2005-06-04), Seiten 284-295, XP010807913, ISBN: 978-0-7695-2270-8

## Beschreibung

Die Erfindung betrifft ein Verfahren zum selektiven Aufzeichnen, Rekonstruieren und Analysieren des Programmlaufs eines Steuerungsprogramms.

Steuerungsprogramme erlauben es, eine Vielzahl unterschiedlicher Abläufe einer zu steuernden Vorrichtung zu definieren, wobei gezielt eine vielfältige und individuelle Ausbildung möglich ist. So werden komplexe Anlagen und Maschinen sowie die ausgeführten Fertigungs- und Verarbeitungsprozesse mittels programmierbarer Steuerungen kontrolliert. Dadurch ergibt sich jedoch auch das Problem, dass derartige Steuerungsprogramme sehr komplex werden und insbesondere von einer Vielzahl möglicher Einflussgrößen abhängen, wobei sich die Abhängigkeiten gegebenenfalls nicht in geschlossener Form darstellen lassen. Auch sind solche Steuerungssysteme zumeist dazu ausgebildet, externe Komponenten einer Maschinensteuerung entsprechend der Steuerungsaufgabe zu bedienen, wobei diese Komponenten bei der Entwicklung des Steuerungsprogramms zumeist nicht vorhanden sind, sodass für erste Tests und Fehlersuchen oftmals mit Modellen bzw. Simulationen gearbeitet werden muss. Dies ist jedoch im Hinblick auf einen Qualititätest des Steuerungsprogramms von Nachteil, da es zumeist nicht möglich ist, das Steuerungsprogramm unter Echtzeitbedingungen zu testen, sondern dass dies zumeist innerhalb eines Systemtest auf einem Simulations- bzw. Emulationssystem geschieht. Auch ist aufgrund der endlichen zur Verfügung stehenden Testzeit ein vollständiger Systemtest zumeist nicht möglich, sodass auch bei einem fertig entwickelten und abgenommenem System stets die Gefahr besteht, dass Betriebszustände vorkommen können, welche zu einem unzulässigen Betriebszustand bzw. einem nicht gewollten Betriebsverhalten führen. Dies wird jedoch zumeist erst im Echtbetrieb unter ganz besonderen Betriebsbedingungen auftreten, wobei es wiederum vorkommen kann, dass derartige Fehlersituationen nur sehr selten auftreten und dann zumeist nicht oder nur äußerst schwer nachstellbar sind. Für den Entwickler ergibt sich nun das Problem einen Fehler zu suchen, der nur äußerst schwer eingrenzbar ist, da sich eine systematische Fehlersuche zumeist direkt auf das Ablaufverhalten des Steuerungsprogramms auswirken wird und somit zur Fehlerlokalisation ungeeignet ist.

Ein weiteres Problem ergibt sich bei Steuerungsprogrammen für zeitkritische Steuerungsaufgaben, da in diesem Fall ein Fehlerprotokolllauf, ein so genannter DEBUG-Lauf, nicht möglich ist, da sich dieser derart negativ auf das Zeitverhalten des Ablaufprogramms auswirken würde, dass die Ausführung der Steuerungsaufgabe nicht mehr zuverlässig gewährleistet ist bzw. durch einen solchen DEBUG-Lauf das Laufzeitverhalten massiv beeinflusst werden würde.

Zur Fehlersuche eines sporadisch und nicht einfach reproduzierbar auftretenden Fehlers ist es daher ausgesprochen hilfreich, ein Protokoll des Ablaufs des Steuerungsprogramms zu erstellen, um daraus im Fehlerfall rückwärts schließen zu können, welche Anweisungs- bzw. Ablaufkette zu diesem Fehlerfall geführt hat. Dabei ist es jedoch möglich, dass sich derartige Fehler Ober einen sehr langen Zeitraum hin aufbauen, sodass die Aufzeichnungen des Programmlaufs gegebenenfalls über einen sehr langen Zeitraum erfolgen muss, wobei in dieser Aufzeichnungsphase eine Beeinflussung des Programmlaufs verhindert sein muss. Die Aufzeichnung muss also während des laufenden Betriebs der zu steuernden Vorrichtung erfolgen.

Bekannte DEBUG Systeme sind dazu nicht geeignet, da sie immer eine deutliche Belastung des ausführenden Systems produzieren, sodass die Anforderungen an das Zeitverhalten bei der Ausführung nicht mehr gewährleistet sind. Gerade im Hinblick auf Zeitkritische- bzw. Echtzeitanwendungen muss die Belastung des ausführenden Systems äußerst gering gehalten werden, sodass jedenfalls die Laufzeitanforderungen eingehalten werden. Insbesondere kann sich durch die Beeinflussung des Zeitverhaltens auch die Programmsemantik verändern, so dass der Fehler ggf. nicht mehr auftritt.

Aus dem Stand der Technik ist das so genannte deterministic replay debugging bekannt, bei dem bei der Programmausführung Statusabbilder der Teilprozesse, Aufrufreihenfolgen, Taskwechsel, Interrupts sowie Speicherzugriffe auf Variablen protokolliert werden, um dadurch ein Abbild des Programmlaufs zu erhalten. Aufgrund der großen, aufgezeichneten Datenmenge und des teils erforderlichen tiefen Eingriffs in das Betriebssystem ist ein derartiges Verfahren jedoch für zeitkritische Anwendungen nicht optimal geeignet, da die erforderlichen Sicherungsschritte die Programmausführung zu stark belasten würden.

Narayanasamy "BugNet: Continuously Recording Programm Execution for Deterministic Replay Debugging" zeigt ein solches Verfahren.

Die Aufgabe der Erfindung liegt also darin ein Verfahren zu schaffen, welches aus einer minimalen Menge aufgezeichneter Daten die ausreichend detaillierte Rekonstruktion des ursprünglichen Programmlaufes ermöglicht. Insbesondere ist es Aufgabe der Erfindung, jene Information zu finden, die minimal erforderlich ist, um daraus einen vollständigen Programmlauf wiederherstellen zu können, wobei die Aufzeichnungen dieser minimalen Datenmenge die Ausführung des Steuerungsprogramms nur in einem unwesentlichen Maß belastet.

Die Aufgabe der Erfindung wird durch die kennzeichnenden Merkmale des Hauptanspruches gelöst.

Dabei wird im ersten Verfahrensschritt, der Programminstrumentierung, ein bestehendes Steuerungsprogramm derart analysiert und aufbereitet, dass bei der Ausführung des Steuerungsprogramms nur jene minimale Datenmenge aufgezeichnet wird, die zur Rekonstruktion des Programmlaufes unbedingt erforderlich ist.

Im nächsten Verfahrensschritt, der Echtzeit-Aufzeichnungsphase, wird das generierte, erste instrumentierte Steuerungsprogramm ausgeführt, also die zuvor instrumentierten Anweisungen ausgeführt, wodurch die Aufzeichnung der Daten erfolgt, ohne das Laufzeitverhalten wesentlich zu beeinflussen. Alle weiteren Verfahrensschritte finden nun nicht mehr am Laufzeitsystem statt, sodass dadurch keine Beeinflussung des Laufzeitverhaltens möglich ist.

In der Datenrekonstruktion als nächsten Verfahrensschritt werden den sequentiell und unstrukturiert aufgezeichneten Datenwerten die jeweils korrespondierenden Datenbereiche zugeordnet, wobei ferner im nächsten Verfahrensschritt, der Laufzeitkonstruktion, die Ausführungsreihenfolge der einzelnen, instrumentierten Teilprogramme festgelegt wird, sodass ein Protokoll gebildet wird, welches in sequentieller, geordneter Reihenfolge die Datenwerte der Variablen der instrumentierten Teilprogramme sowie Steuerungsanweisungen zur Durchführung eines Ausführungswechsels zwischen Teilprogrammen enthält.

In der abschließenden Analysephase kann nun dieses Protokoll verwendet werden, um einen Programmlauf durchführen zu können, der zu den selben Datenabhängigkeiten führt, wie beim Programmlauf während der Aufzeichnung am Laufzeitsystem.
Die einzelnen Verfahrensschritte werden nun folgend im Detail beschrieben.

Ein Steuerungsprogramm ist aus einer Mehrzahl von abgeschlossenen Teilprogrammen gebildet, welche Teilprogamme durch einen Start und einen Endpunkt gekennzeichnet sind, wobei zwischen diesen Punkten Programm-Ablaufanweisungen angeordnet sind, insbesondere werden mittels dieser Ablaufanweisungen Zugriffe auf Datenbereiche erfolgen. Derartige Datenbereiche können nun lokal für ein Teilprogramm vorhanden sein, es ist jedoch auch möglich, dass Datenbereiche von mehreren Teilprogrammen genutzt werden, beispielsweise um Daten zwischen Teilprogrammen auszutauschen. Derartige Datenbereiche sind unter dem Begriff "shared variables" bekannt. Insbesondere ist somit das Laufzeitverhalten eines Steuerungsprogramms zum wesentlichen Teil von den Datenabhängigkeiten dieser gemeinsamen genutzten Datenbereiche bestimmt, da dadurch die gegenseitigen Abhängigkeiten repräsentiert werden und sich diese wiederum eindeutig aus einem spezifischen Programmlauf ergeben.

Bei Analyse eines Programmlaufs eines Steuerungsprogramms hat sich nun überraschenderweise feststellen lassen, dass sich aus den aufgezeichneten Lesezugriffen auf derartige, gemeinsame Datenbereiche, durch eine, der Aufzeichnung nachgelagerte, also nicht mehr unter Laufzeitbedingungen erfolgende Analyse, der vollständige Programmlauf der zu diesem Datenverhalten geführt hat, hinreichend genau rekonstruieren lässt um die Datenabhätigigkeiten zwischen den Teilprogrammen und die damit in Verbindung stehenden Fehlerbilder analysieren zu können.

Dazu werden in der Programminstrumentierung drei instrumentierte Steuerungsprogramme gebildet, wobei für jedes dieser Steuerungsprogramme eine Anzahl von Teilprogrammen durch instrumentierte Teilprogramme ersetzt werden, insbesondere werden Lese- und/oder Schreibzugriffe auf nicht exklusive Datenbereiche durch eine spezifische Funktion ersetzt. Dazu werden in einem Vorbereitungsschritt die zu instrumentierenden Teilprogramme analysiert und jene Datenbereiche ermittelt, welche nicht nur innerhalb des Teilprogramms verwendet werden, sondern welche durch andere Teilprogramme bzw. externe Einheiten, wie beispielsweise Rückmeldedatenbereiche von Steuerungsvorrichtungen, verwendet werden. Für diese Datenbereiche werden nun je zu instrumentierendes Teilprogramm die Schreib- und Lesezugriffe ermittelt und jeweils:
- ein erstes instrumentiertes Teilprogramm generiert wird, indem jeder ermittelte Lesezugriff durch eine Lese-Aufzeichmingsfunktion ersetzt wird;
- ein zweites instrumentiertes Teilprogramm generiert wird, indem jeder ermittelte Lesezugriff durch eine Lese-Wiedergabefunktion und jeder ermittelte Schreibzugriff durch eine Schreib-Aufzeichnungsfunktion ersetzt wird,
- ein drittes instrumentiertes Teilprogramm generiert wird, indem jeder ermittelte Lese-bzw. Schreibzugriff durch eine Lese- bzw. Schreib-Ablaufsteuerungsfunktion ersetzt wird;
- und jeweils ein erstes, zweites bzw. drittes Steuerungsprogramm gebildet wird, indem das jeweilige zu instrumentierende Teilprogramm durch das erste, zweite bzw. dritte instrumentierte Teilprogramm ersetzt wird.

Da die jeweiligen instrumentierten Teilprogramme aus programmtechnischer Sicht in ihrer Funktionalität nicht geändert werden, sondern lediglich Schreib- und Lesezugriffe durch spezifische Funktionen ersetzt werden, wird zur Vereinfachung der Beschreibung der Zusatz erstes, zweites oder drittes instrumentierte Teilprogramm nur dann vorangestellt, wenn das beschriebene Merkmal eine spezifische Ausbildung des jeweiligen instrumentierten Teilprogramms darstellt. Wird ein generell gültiges Merkmal eines instrumentierten Teilprogramms beschrieben, wird der referenzierende Zusatz (erste, zweite und dritte) weggelassen.

Von Vorteil am erfindungsgemäßen Verfahren ist nun, dass diese Programminstrumentierung automatisch erfolgt und beispielsweise auch auf dem Entwicklungssystem des Steuerungsprogramms durchgeführt werden kann.

In der Echtzeit-Aufzeichnungsphase wird das erste instrumentierte Steuerungsprogramm auf dem Laufzeitprogramm ausgeführt, wohin es beispielsweise mittels eines Datenträgers oder einer Datenkommunikationsverbindung übertragen wurde. Diese Ausführungs- bzw. Aufzeichnungsphase ist ein sehr kritischer Verfahrensschritt, der wesentlich über die Eignung des Verfahrens entscheidet, da hier das Steuerungsprogramm unter Laufzeitbedingungen am Laufzeitsystem ausgeführt wird, also seine eigentliche Steuerungsaufgabe durchführt, zusätzlich jedoch die Datensammlung erfolgt, um daraus anschließend einen Programmlauf rekonstruieren zu können. Hier ist es von besonderer Bedeutung, wenn die Datenaufzeichnung nur eine sehr unwesentliche, zusätzliche Last generiert und vor allem keine gegenseitige Blockade beim Zugriff auf gemeinsamen Ressourcen verursacht, sodass das Laufzeitverhalten des Steuerungsprogramms im Wesentlichen unbeeinflusst bleibt. Dies wird dadurch erreicht, dass bei Ausführung der Lese-Aufzeichnungsfunktion der gelesene Datenwert in einen, dem jeweiligen ersten Teilprogramm exklusiv zugeordneten Zwischenpuffer kopiert wird und der Inhalt des Zwischenpuffers zusammen mit einer eindeutigen Kennung des zugeordneten ersten instrumentierten Teilprogramms, zyklisch durch einen ersten Hintergrundprozess in ein erstes Ablaufprotokoll übertragen wird. Da der Kopiervorgang in einen Zwischenpuffer mit sehr hoher Geschwindigkeit erfolgt und darüber hinaus jedem Teilprogramm jeweils ein eigener Zwischenpuffer zugeordnet ist und damit auch keine gegenseitigen Verriegelungsmechanismen bei den Schreibvorgängen vorgesehen werden müssen, ist eine merkliche Auswirkung auf das Laufzeitverhalten aufzuschließen. Weiters erfolgt zu diesem Zeitpunkt auch keinerlei zusätzliche Kennzeichnung der Daten bzw. eine Zuordnung der geschriebenen Daten zu Variablen oder Adressen. Die Zuordnung der aufgezeichneten Daten zu den jeweiligen Leseoperationen bzw. Adressen ergibt sich ausschließlich aus der Reihenfolge der aufgezeichneten Daten und der Reihenfolge der ausgeführten Lese-Aufzeichnungsfunktionen. Die zeitaufwändigere Speicherung des Zwischenpuffers in dem ersten Ablaufprotokoll, insbesondere unter Einfügung der entsprechenden, eindeutigen Kennungen der zugeordneten, ersten instrumentierten Teilprogramme, wird zyklisch durch einen ersten Hintergrundprozess durchgeführt, sodass dieser Vorgang unabhängig und abgekoppelt von der Ausführung des Teilprogramms erfolgen kann. Somit ist in der zeitkritischen Phase der Ausführung des Teilprogramm sichergestellt, dass nur ein äußerst geringes Datenvolumen zu kopieren ist, die Kumulation der gesicherten Datenwerte und Generierung eines Protokolls wird abseits dieser zeitkritischen Phase von einem Hintergrundprozess erledigt.

Ein ganz besonderer Vorteil des erfindungsgemäßen Verfahrens ist, dass keinerlei Informationen über den Punkt, an welchem ein laufendes Teilprogramm durch ein anderes, höherpriores Teilprogramm unterbrochen wurde, zur Laufzeit ermittelt oder aufgezeichnet werden müssen. Diese Informationen wären nur durch tief greifende Eingriffe in das Betriebssystem zugreifbar und ebenso schwierig beim späteren Wiederabspielen in einen entsprechenden Programmlauf umsetzbar. Es wäre dabei zu beachten, dass die Fehleranalyse für das Steuerungsprogramm auf Ebene einer entsprechenden Programmierhochsprache (z.B. gemäß IEC61131-3) stattfindet, während die Taskwechsel auf Ebene des Maschinencodes erfolgen.

Ein weiterer Vorteil des erfindungsgemäßen Verfahrens liegt nun darin, dass alle weiteren, folgenden Verfahrensschritte nicht mehr am Laufzeitsystem durchgeführt werden bzw. keinen Zugriff auf dieses System erforderlich machen und somit eine Beeinflussung des Laufzeitverhaltens ausgeschlossen ist.

Bei der Datenrekonstruktion wird das zweite instrumentierte Steuerungsprogramm auf einem Rekonstruktionssystem ausgeführt, auf welches das erste Ablaufprotokoll übertragen wurde, wobei bei der Ausführung eines zweiten instrumentierten Teilprogramms die Datenwerte bei Ausführung einer Lese-Wiedergabefunktion aus einem korrespondierendem Datenwert aus dem ersten Ablaufprotokoll ermittelt werden, wodurch ein erster Schritt zur Herstellung der Datenabhängigkeit wie im Echtzeit-Aufzeichnungslauf gegeben ist. Bei Ausführung der Lese-Wiedergabefunktion bzw. der Schreib-Aufzeichnungsfunktion wird ferner der jeweilige Datenwert gemeinsam mit einer Identifikationskennung der jeweiligen Speicherstelle im nicht exklusiven Datenbereich und einer Identifikationskennung des jeweiligen ersten instrumentierten Teilprogramms, in das zweite Ablaufprotokoll übertragen. Somit enthält das zweite Ablaufprotokoll in einer geordneten Reihenfolge alle lesenden und schreibenden Zugriffe auf nicht exklusive Datenbereiche, wobei die Datenwerte der Lesezugriffe aus den zuvor aufgezeichneten Datenwerten gebildet werden. Da das zweite instrumentierte Steuerungsprogramm funktional ident zum ersten instrumentierten Steuerungsprogramm ist, werden auch die Werte bei einem schreibenden Zugriff auf nicht exklusive Datenbereiche identisch zu den Datenwerten sein, wie sie aufgrund der Datenabhängigkeiten der Ablaufanweisungen bei der Echtzeit-Aufzeichnungsphase aufgetreten sind. Aus diesem Grund ist es nicht erforderlich, die Schreibzugriffe auf nicht exklusive Datenbereiche in der Echtzeit-Aufzeichnungsphase zu protokollieren, was einen ganz besonderen Vorteil des erfindungsgemäßen Verfahrens darstellt. Da zusammen mit dem Datenwert eine Identifikationskennung der Speicherstelle und eine Identifikationskennung des jeweiligen instrumentierten Teilprogramms in das zweite Ablaufprotokoll übertragen wird, ist aus diesem Ablaufprotokoll eindeutig ableitbar, zu welchem Ausführungszeitpunkt, insbesondere in welcher Abfolge, ein nicht exklusiver Datenbereich welchen spezifischen Wert zugewiesen hatte. Bei der Datenrekonstruktion können die einzelnen Teilprogramme zeitlich völlig unabhängig von einander ausgeführt werden, da die unter Echtzeitbedingung bestehende Datenabhängigkeit zwischen den Teilprogrammen vollständig in den für jedes Teilprogramm gesondert abgespeicherten Werten des ersten Ablaufprotokolls abgebildet ist. Daher kommt es bei der Datenrekonstruktion nur auf das Input-/Output-Verhalten der Teilprogramme an.

Aus dem entstandenen zweiten Ablaufprotokoll ist jedoch noch nicht ableitbar, wie die Ausführungsreihenfolge der einzelnen instrumentierten Teilprogramme war, um diese Datenfolge zu erzeugen.

Dazu wird in der Laufzeitrekonstruktion das zweite Ablaufprotokoll analysiert und für jeden aufgezeichneten Lesezugriff eines zweiten instrumentierten Teilprogramms, in den aufgezeichneten Schreibzugriffen der anderen zweiten instrumentierten Teilprogramme eine Übereinstimmung des Datenwerts sowie der Identifikationskennung der Speicherstelle gesucht. Wird beispielsweise von einem Teilprogramm ein Datenbereich mit zeitlichem Abstand zweimal hintereinander gelesen und hat sich der gelesene Datenwert in der Zwischenzeit geändert, so muss zwangsläufig dazwischen ein schreibender Zugriff auf diesen Datenbereich stattgefunden haben, wobei für das erfindungsgemäße Verfahren nur jene Schreibzugriffe interessant sind, die von anderen instrumentierten Teilprogrammen erfolgt sind. Die Ausführungsreihenfolge der Teilprogramm am Laufzeitsystem hängt nun ferner von Ausführungsprioritäten ab, sodass die zusätzlichen Beschränkungsregeln für das Ausführungszeitverhalten herangezogen werden, um aus dem ermittelten Lese-Schreibzugriffskombinationen jene zu bestimmen, die den geltenden Beschränkungsregeln am besten entsprechen und somit eine Ausführungsreihenfolge der zweiten instrumentierten Teilprogramme derart ermittelt wird, dass die gelesenen Datenwerte eines jeden zweiten instrumentierten Teilprogramms mit zuletzt geschriebenen Datenwerten sämtlicher anderer zweiten instrumentierten Teilprogramme widerspruchsfrei übereinstimmen.

Diese Ausführungsreihenfolge ist nun eine mögliche Reihenfolge, die nicht notwendigerweise mit jener Ausführungsreihenfolge übereinstimmen muss, die bei der Echtzeit-Ausführungsphase gegeben war, es ist jedoch sichergestellt, dass diese Ausführungsreihenfolge genau die selbe Datenabhängigkeit der Datenwerte der nicht exklusiven Datenbereiche herstellt, wie sie bei der Echtzeit-Ausführungsphase gegeben war. Es kann somit eine Vielzahl weiterer Ausführungsreihenfolgen geben, die zu diesen Datenabhängigkeiten führen, was für das erfindungsgemäße Verfahren unwesentlich ist, da lediglich sichergestellt sein muss, dass die ermittelte Reihenfolge die beobachtete Datenabhängigkeit liefert.

Ferner wird ein drittes Ablaufprotokoll generiert, in welches in einer zeitlich hintereinander gelagerten Abfolge, die Datenwerte der Lesezugriffe entsprechend dem ersten Ablaufprotokoll und zusätzlich Ablaufverzweigungsanweisungen eingetragen werden. Im dritten Ablaufprotokoll sind nun in chronologischer Reihenfolge alle gelesenen und geschriebenen Datenwerte und ferner Ablaufverzweigungsanweisungen hinterlegt, wodurch dieses dritte Ablaufprotokoll einem Abbild einer Ausführungsreihenfolge aus Sicht der Datenwerte entspricht.

Dieses dritte Ablaufprotokoll wird nun in der Analysephase vom dritten instrumentierten Steuerungsprogramm, insbesondere der Lese- und Schreibablaufsteuerungsfunktionen der dritten, instrumentierten Teilprogramme sequentiell abgearbeitet, wobei bei Ausführung jeder Lese- und Schreib-Ablaufsteuerungsfunktion der jeweils nächste im dritten Abiaufprotokoll hinterlegte Eintrag gelesen wird. Ist dieser Eintrag eine Ablaufverzweigungsanweisung, wird mittels dieser Kennung ein Wechsel der Ausführung von dem aktuellen Teilprogramm zu dem, der ausgelesenen Kennung entsprechenden Teilprogramm erzwungen. Der Wechsel wird beispielsweise dadurch erzwungen, indem das laufende Teilprogramm den Ausführungsstatus des nachfolgenden Teilprogramms von "unterbrochen" ("sleeping") auf "ausführungsbereit" ("ready") ändert bzw. ein entsprechendes Trigger-Ereignis an das Betriebssystem übermittelt und anschließend den eigenen Ausführungsstatus auf "unterbrochen" ("sleeping") abändert. In diesem Fall wird bei der Ausführung des nun aktiven Teilprogramms fortgefahren d.h. das Betriebssystem weist die Prozessorressource dem nun aktiven Teilprogramm zu. Wird das unterbrochene Teilprogramm seinerseits wieder aktiviert, so wird die zuvor ausgeführte Lese- oder Schreib-Ablaufsteuerungsfunktion abermals ausgeführt und der nächste Eintrag aus dem dritten Ablaufprotokoll gelesen und geprüft Wird bei Ausführung der LeseAblaufsteuerungsfunktion ein hinterlegter Datenwert ermittelt, wird dieser der jeweils zugeordneten Speicherstelle im nicht exklusiven Datenbereich zugewiesen. Die Schreib-Ablaufsteuerungsfunktion führt hier also lediglich die Prüfung auf einen durchzuführende Ablaufverzweigung durch, eine Ermittlung bzw. Zuordnung eines Datenwerts ist nicht vorgesehen, da sich ein derartiger Datenwert direkt aus den Anweisungen des Teilprogramms, unter anderem basierend aufgrund der gelesenen Datenwerte, aus dem dritten Ablaufprotokoll ergibt.

Bei Ausführung des dritten instrumentierten Steuerungsprogramms ist nun sichergestellt, dass zu jedem Zeitpunkt der Ausführung dieselbe Datenkausalität wie bei der Ausführung des ersten instrumentierten Steuerungsprogramms am Laufzeitsystem gegeben ist. Hier kann nun mit einem Analysewerkzeug, beispielsweise einem Debugger, begonnen werden das Laufzeitverhalten zu analysieren und so einen aufgetretenen Fehler lokalisieren zu können.

Der wesentliche Vorteil des erfindungsgemäßen Verfahrens liegt nun darin, dass aus einer minimal aufgezeichneten Datenmenge der Lesezugriffe auf nicht exklusive Datenbereiche, durch Analyse der Datenabhängigkeiten und durch Anwendung der Beschränkungsregeln im Hinblick auf die Ausführungsprioritäten, eine Ausführungsreihenfolge ermittelt werden kann, welche die Datenabhängigkeit des tatsächlich ausgeführten Steuerungsprogramms gewährleistet.

Eine vorteilhafte Weiterbildung liegt darin, dass das erste Steuerungsprogramm unter Echtzeitbedingungen ausgeführt wird, wobei die Teilprogramme im Wesentlichen eigenständig und nebenläufig ausgeführt werden und wobei die zeitliche Zuteilung einer Ausführungseinheit des Laufzeitsystems zur Ausführung der Teilprogramme abhängig von den, den Teilprogrammen jeweils zugeordneten Ausführungsprioritäten und den Zeitpunkten des Eintretens von Startereignissen erfolgt. Für ein Programm welches unter Echtzeitbedingungen ausgeführt wird, gelten ganz besondere Einschränkungen hinsichtlich der Ausführungszeit, insbesondere ist in jedem Fall zu gewährleisten, dass festgelegte maximal zulässige Ausführungs- bzw. Reaktionszeiten auf bestimmte Ereignisse garantiert eingehalten, d.h. unterschritten, werden. Bei Ausführung unter Echtzeitbedingungen ist ferner sicherzustellen, dass sowohl die Startverzögerung, also jene Zeitspanne vom Auslösen der Startbedingung bis zur programmgemäß vorgesehenen Aktion des Teitprogramms einen festgelegten Wert nicht überschreiten darf. Eine in diesem Zeitraum stattfindende Datenaufzeichnung muss nun derart ausgestaltet sein, dass die Zusatzbelastung äußerst gering gehalten wird, sowie ein gegenseitiges Blockieren der Teilprogramme durch Zugriffe auf gemeinsame Ressourcen ausgeschlossen ist, was vom erfindungsgemäßen Verfahren in vorteilhafter Weise gewährleistet ist. Die Ausführung eines Teilprogramms kann nun beispielsweise zyklisch erfolgen, dabei wird im Sinne eines Zeitscheibenmodells ein Teilprogramm mit einer festlegbaren Wiederholungsrate gestartet, es ist jedoch auch ein ereignisbasiertes Modell möglich, bei dem die Teilprogramme durch das Eintreten definierter Ereignisse gestartet werden; ebenso sind Mischformen dieser Ausführungsformen denkbar. Dabei befindet sich ein Teilprogramm in einem bestimmten Ausgangszustand für den als Startbedingung ein Ereignis bzw. eine Ereigniskombination festlegbar ist und wobei bei Erfüllung dieser Bedingung das Teilprogramm zur Ausführung kommt. Ein derartiges Ereignis kann beispielsweise eine Unterbrechungsanforderung von einem externen System oder eine Startanforderung eines anderen Teilprogramms sein. Durch die nebenläufige und damit quasi parallele Ausführung der einzelnen Teilprogramme gibt es kein fixes Ablaufschema, wobei jedoch durch Vergabe von Ablaufprioritäten die Ausführungsreihenfolge dahingehend beeinflusst werden kann, dass ein hochpriorisiertes Teilprogramm die Ausführung eines niedriger priorisierten Teilprogramms unterbrechen kann und sich somit Ausführungszeit am Laufzeitsystem sichern kann. Grundsätzlich wird das Laufzeitsystem ausreichend Verarbeitungskapazität haben, um neben der Ausführung betriebsrelevanter Grundfunktionen die Echtzeitausführung der Teilprogramme jedenfalls gewährleisten zu können.

Eine vorteilhafte Weiterbildung des erfindungsgemäßen Verfahrens liegt darin, dass das Steuerungsprogramm auf einer speicherprogrammierbaren Steuerung (SPS) für eine Maschine ausgeführt wird. Eine SPS ist eine spezielle Ausführung einer Steuerung für Anwendungen zur Ablaufsteuerung von Maschinen bzw. Produktionssystemen. Da im Hauptanwendungsfall eine derartige SPS zumeist eigenständig operieren muss, insbesondere ein Langzeitbetrieb gegeben ist, sind derartige Systeme zumeist aus Performancegründen recht kompakt ausgebildet, sie sind daher auf die Durchführung von Steuerungsaufgaben optimiert, eine Durchführung zusätzlicher Überwachungs- bzw. Kontrollaufgaben ist nur in bedingtem Maße vorgesehen. Das erfindungsgemäße Verfahren hat daher den Vorteil, dass die bestehenden Systemressourcen einer SPS völlig ausreichen, um das Steuerungsprogramm hinsichtlich seines Zeitverhaltens korrekt abarbeiten zu können und zusätzlich jedoch die Aufzeichnung von Betriebsdaten durchführen zu können, da aufgrund des erfindungsgemäßen Verfahrens nur eine sehr geringe Datenmenge aufgezeichnet werden muss.

In einer Weiterbildung wird bei der Programminstrumentierung in jedes erste instrumentierte Teilprogramm zumindest eine Statusprotokollfunktion eingefügt, die bei Ausführung während der Echtzeit-Aufzeichnungsphase, Informationen Ober den Startzeitpunkt sowie gegebenenfalls über den Endzeitpunkt der Ausführung des jeweiligen ersten instrumentierten Teilprogramms in den exklusiv zugeordneten Zwischenspeicher schreibt. Erfindungsgemäß wird die Ausführungsreihenfolge der einzelnen Teilprogramme dadurch ermittelt, dass durch Vergleich der aufgezeichneten Datenwerte der einzelnen Teilprogramme und unter Berücksichtigung der Ausführungsbeschränkungen, ein Zusammenhang hergestellt wird. Diese Weiterbildung hat nun den Vorteil, dass bereits während der Echtzeit-Aufzeichnungsphase eine Information mit aufgezeichnet wird, die einen direkten Bezug zum Ausführungszeitpunkt des jeweiligen Teilprogramms herstellen lässt. Diese Information kann beispielsweise ein Zeitstempel oder ein Ablaufzähler sein. Durch diese Information kann bei der Laufzeitrekonstruktion der Programmlauf einfacher und genauer rekonstruiert werden.

Bei der Ausführung eines Steuerungsprogramms kann es vorkommen, dass ein Fehler nur sehr selten auftritt, also dass über einen großen Zeitraum aufgezeichnet werden müsste, um den Fehler nachstellen zu können. Insbesondere müsste auch bei der Analyse der gesamte aufgezeichnete Programmlauf abgearbeitet werden, um zur Fehlerstelle zu gelangen. Daher ist es von Vorteil, wenn periodisch eine Zustandssicherung initiiert wird, wobei ein zweiter Hintergrundprozess nach Erreichen des Endpunkts des ausgeführten ersten instrumentierten Teilprogramms, insbesondere am Ende des Teilprogramms, ein Speicherabbild von exklusiven Datenbereichen, zusammen mit einer Positionsmarkierung des ersten Ablaufprotokolls, in einen Zwischenspeicher kopiert. Exklusive Datenbereiche eines Teilprogramms werden nur aufgrund der Ausführung von Programm-Ablaufanweisungen des jeweiligen Teilprogramms verändert, es gibt keine Abhängigkeit zu Datenbereichen anderer Teilprogramme. In der Analysephase kann nun auf diese Zustandssicherung zurückgegriffen werden und somit im Wesentlichen zu einem beliebigen Zeitpunkt der Aufzeichnung begonnen werden, das Steuerungsprogramm wieder ablaufen zu lassen und die gesamte Vorgeschichte des Ablaufs bis zu diesem Zeitpunkt berücksichtigt zu haben. Da ferner eine Positionsmarkierung des ersten Ablaufprotokolls gesichert wird, ist eine eindeutige Zuordnung des Speicherbilds zu der im ersten Ablaufprotokoll gegebenen Ausführungsreihenfolge gewährleistet. Ebenso werden erfindungsgemäß in chronologischer Reihenfolge die gelesenen Datenwerte in das erste Ablaufprotokoll übertragen, wodurch ein direkter Rückschluss auf den Ausführungszeitpunkt der jeweiligen Datenzugriffsoperation gegeben ist. Ein weiterer Vorteil aus der periodischen Zustandssicherung ist die daraus resultierende Möglichkeit, ältere Teile der Protokollaufzeichnungen wieder löschen zu können da die Rekonstruktion nicht mehr vom Einschaltzustand ausgehend erfolgen muss. Es können so beispielsweise nur Aufzeichnungen über die letzten 24 oder 48 Betriebsstunden gespeichert werden. Dies begrenzt die erforderliche Größe des Protokollspeichers und ermöglicht dennoch eine zeitlich ausreichende Analysetiefe im Fehlerfall bei gleichzeitig kontinuierlicher Aufzeichnung

Um eine zeitliche Zuordnung der gesicherten Speicherabbilder zu erleichtern, ist es von Vorteil, wenn zusammen mit dem Speicherabbild eine Sequenznummer gesichert wird. Aufgrund der nebenläufigen Ausführung der Teilprogramme ist es im Hinblick auf eine vereinfachte Zuordnung der gesicherten Speicherabbilder zum ersten Ablaufprotokoll von Vorteil, wenn zusammen mit dem Speicherabbild eine Information mitgesichert wird, über die ein Zusammenhang zwischen dem Speicherabbild und dem ersten Ablaufprotokoll herstellbar ist. Diese Sequenznummer kann beispielsweise ein Schleifenzähler sein, der je Durchlauf des Teilprogramms erhöht wird, auch ist eine Ausbildung als Zeitstempel möglich, ferner können die Speicherabbilder chronologisch angeordnet sein, um so jeweils eine Zuordnung zum ersten Ablaufprotokoll zu ermöglichen.

Nach einer erfindungsgemäßen Weiterbildung wird die Sicherung des Speicherabbilds nach Ausführungsende des jeweiligen Teilprogramms durchgeführt, wobei es aufgrund der nebenläufigen Ausführung der Teilprogramme und der damit möglichen Verzögerung des Sicherungsvorganges vorkommen kann, dass das Teilprogramm, für das aktuell eine Sicherung des Speicherbilds erfolgt, wieder gestartet wurde und somit die Sicherung des Speicherabbilds ungültig wird, da sich die zu sichernden Werte ändern können und damit das erstellte Speicherabbild inkonsistent wird. Daher wird gemäß einer Weiterbildung bei der Ausführung des ersten instrumentierten Teilprogramms, bei Ausführung des Start- bzw. Endpunktes eine entsprechende korrespondierende Kennung gesetzt, wobei nach Ende der Sicherung des Speicherabbilds die Start- und Endkennung des Teilprogramms verglichen wird und bei fehlender Übereinstimmung, das Speicherabbild verworfen wird. Eine derartige Kennung kann beispielsweise durch einen Ablaufzähler gebildet sein, der bei Ausführung des Startpunktes hochgezählt wird und bei Erreichen des Endpunkts eine Endpunktkennung ebenfalls hochgezählt wird, sodass nach Durchlauf des ersten Teilprogramms beide Kennungen denselben Wert aufweisen. Wird während einer laufenden Speicherabbildsicherung das Teilprogramm erneut gestartet, wird also die Startkennung geändert, kann nach Abschluss des Speicherabbildsicherungsvorgangs dieses eindeutig auf unterschiedliche Start und Endkennungen geprüft werden und bei fehlerhafter Übereinstimmung das Speicherabbild verworfen werden. Diese Weiterbildung ist insbesondere dahingehend von Vorteil, dass die Speicherabbildsicherung mit niedriger Priorität durchgeführt wird, wodurch aufgrund der nebenläufigen Ausführung jederzeit eine Unterbrechung der Sicherung durch ein erneut gestartetes Teilprogramm möglich ist, jedoch eindeutig feststellbar ist, ob eine Sicherung gültig durchgeführt wurde. Ein Vorteil dieser Weiterbildung besteht darin, dass die Speicherabbilder für jedes Teilprogramm getrennt und zeitlich versetzt gesichert werden können und kein Gesamtabbild für die gesamte Steuerungssoftware gesichert werden muss. Dadurch bleiben die jeweils zu sichernden Datenblöcke vergleichsweise klein und die für die Sicherung jeweils erforderliche Zeitspanne ausreichend kurz, so dass eine Sicherung ohne Beeinträchtigung der Echtzeitbedingungen möglich wird.

Nach einer Weiterbildung ist ferner vorgesehen, dass nur bei einer erfolgreich durchgeführten Überprüfung, also bei einer Übereinstimmung der Start- und Endkennung des Teilprogramms, das Speicherabbild in ein Statusprotokoll übertragen wird. Somit ist sicher gestellt, dass ungültige Speicherabbilder nicht unnötig oft in das Statusprotokoll übertragen werden.

Um die verfügbar Zeitspanne und damit die Wahrscheinlichkeit für eine erfolgreiche Durchführung der Speicherabbildsicherung zu maximieren, ist es von Vorteil, wenn unmittelbar nach Beendigung des Programmlaufs eines ersten instrumentierten Teilprogramms eine Synchronisationsnachricht an den zweiten Hintergrundprozess gesendet wird. Daraufhin erfolgt eine Überprüfung des verstrichenen Zeitintervalls seit der letzten durchgeführten Sicherung des Speicherabbildes dieses Teilprogramms und bei Überschreitung einer vorgegebenen Zeitspanne wird eine erneute Sicherung initiiert. Durch die nebenläufige Ausführung der Teilprogramme ist somit keine zentrale Verwaltungsinstanz erforderlich, um einen Sicherungszeitpunkt festlegen zu können, sondern wird dieser vom ablaufenden Teilprogramm selbst ausgelöst. Dies ist beispielsweise dahingehend von Vorteil, dass manche Teilprogramm nur sehr selten ausgeführt werden und so eine rein zeitbasierte, periodische Ausführung der Sicherung nicht zwecksmäßig ist, da dann beispielsweise die Sicherung durchgeführt wird, obwohl das Teilprogramm nicht ausgeführt wurde und somit die zu sichernden Datenwerte nicht geändert wurden.

Durch die Erstellung von Speicherabbildern erhält man den weiteren Vorteil, dass bei der Datenrekonstruktion ein Startzeitpunkt für die Ausführung des zweiten Steuerungsprogramms gewählt werden kann, wobei die für diesen Zeitpunkt letztgültigen Speicherabbilder der einzelnen instrumentierten Teilprogramme geladen werden. Somit kann die Rekonstruktion des Programmlaufs von einem Zeitpunkt beginnen, an dem ein Speicherabbild vorhanden ist, ohne dass vom Beginn der aufgezeichneten Daten, also vom Beginn des ersten Ablaufprotokolls, das zweite instrumentierte Steuerungsprogramm für die Datenrekonstruktion durchlaufen und die Ausführungsreihenfolge der Teilprogramme rekonstruiert werden müsste. Gerade aufgrund der spezifischen Struktur der auftretenden Fehler hat diese erfindungsgemäße Weiterbildung den besonderen Vorteil, dass nur ein vergleichsweise kleiner Teilbereich der aufgezeichneten Datenwerte aufbereitet und analysiert werden muss, um die gesamte Ablaufgeschichte, die bis zu diesem aufgezeichnetem Zustand gegeben war, zu berücksichtigen. Dies stellt einen erheblichen Zeitgewinn bei der Daten- und Laufzeitrekonstruktion dar.

Nach einer Weiterbildung ist vorgesehen, dass jeweils vor Beginn der Ausführung eines zweiten instrumentierten Teilprogramms die jeweilige Leseposition im ersten Ablaufprotokoll anhand der zugeordneten Positionsmarkierung des geladenen Speicherabbildes festgelegt wird. Mit dieser Weiterbildung wird wiederum erreicht, dass auf einfachem Weg eine Zuordnung zwischen dem ersten Ablaufprotokoll und dem Statusprotokoll möglich ist.

Eine Weiterbildung bei der die Echtzeit-Aufzeichnung ständig während der Ausführung des Steuerungsprogramms durchgerührt wird, hat den Vorteil, dass aufgrund des erfindungsgemäßen Verfahrens, insbesondere aufgrund der geringen aufzuzeichnenden Datenmenge und der unwesentlichen Beeinflussung der Ausführungszeitcharakteristik und der Prozessorauslastung, diese Aufzeichnung kontinuierlich erfolgen kann, also dass das erste, instrumentierte Steuerungsprogramm permanent am Laufzeitsystem ausgeführt werden kann. Bei bekannten Fehlersuchverfahren wird erst nach Auftreten eines Fehlers ein speziell modifiziertes Steuerungsprogramm am Laufzeitsystem hinterlegt und versucht, das fehlerhafte Verhalten erneut herbeizuführen. Dies hat zur Folge, dass das Laufzeitsystem angehalten werden muss, das modifizierte Steuerungssystem eingespielt werden muss und dann die zu steuernde Vorrichtung wieder in Betrieb genommen werden muss, um dann darauf zu warten, dass der Fehler wieder auftritt. Aufgrund der Modifikationen ist dabei stets mit einer Veränderung der Ausführungszeit des Steuerungsprogramms zu rechnen was auch eine Veränderung bei den das Fehlerbild auslösenden besonderen Betriebsbedingungen bewirken kann und damit das gewollte Reproduzieren der Fehlersituation und weiters die Fehlersuche ganz erheblich erschweren kann. Das erfingdungsgemäß instrumentierte erste Steuerungsprogramm kann nun betriebsmäßig und ständig auch während dem regulären Programmlauf am Laufzeitsystem ausgeführt werden und auch permanent Daten aufzeichnen, ohne eine Leistungsreduktion befürchten zu müssen und somit jederzeit einen aufgetretenen Fehler analysieren zu können.

Auch wird dadurch vermieden, dass sich ein modifiziertes Steuerungsprogramm zur Aufzeichnung eines Fehlers anders verhält als ein nicht modifiziertes Steuerungsprogranun. Dadurch werden auch seltene Fehler, die nur bei speziellen und schwer rekonstruierbaren Betriebsbedingungen auftreten, erfassbar. Weiters kann die Aufzeichnung und Analyse während des Normalbetriebs auch zur Ursachenanalyse bei schwerwiegenden Fehlersituationen dienen, bei denen es etwa auch um Haftungsfragen geht, um einen Ablauf eindeutig dokumentieren zu können.

Eine Weiterbildung kann auch dadurch bestehen, dass bei der Programminstrumentierung eine Auswahl der zu instrumentierenden Teilprogramme erfolgt, da zumeist eine grobe Eingrenzung einer Fehlerursache möglich ist, sodass in diesem Fall nur jene Teilprogramme betrachtet werden müssen, die das entsprechende Teilgebiet betreffen. Auch wenn die Zusatzbelastung durch das erfindungsgemäße Verfahren sehr gering ist, kann es Anwendungsfälle geben, wo auch diese geringe Zusatzbelastung das Ausführungszeitverhalten des Teilprogramm geringfügig beeinflusst, sodass es von Vorteil ist, wenn nur wirklich die minimal erforderlichen Teilprogramme instrumentiert werden. Diese Auswahl kann beispielsweise durch eine system unterstützte Auswahlfestlegung erfolgen, wobei am Entwicklungssystem das zu instrumentierende Modul ausgewählt werden kann und darauf hin automatisch die betreffenden Teilprogramme identifiziert und anschließend instrumentiert werden. Insbesondere ist es aufgrund der automatisierten Programminstrumentierung möglich, dem Benutzer einen Großteil der Auswahlarbeiten abzunehmen und insbesondere die minimal erforderliche Menge an Teilprogrammen auszuwählen und zu instrumentieren.

Erfindungsgemäß werden in der Programminstrumentierung für jedes zu instrumentierende Teilprogramm die nicht exklusiven Datenbereiche ermittelt, wobei in diesem Schritt auch Datenbereiche ermittelt werden, die zwar von anderen Teilprogrammen verwendet werden, diese Teilprogramme gegebenenfalls jedoch nicht instrumentiert werden. Daher werden in einer Weiterbildung für die zweiten instrumentierten Teilprogramme bzw. das zweite instrumentierte Steuerungsprogramm, nur jene Schreibzugriffe ermittelt, die auf nicht-exklusive Datenbereiche zugreifen, auf die zumindest ein anderes zu instrumentierendes Teilprogramm lesend zugreift. Durch diese Weiterbildung wird eine weitere Reduktion der aufzuzeichnenden Daten erreicht, da somit nur ausschließlich jene Datenschreibzugriffe aufgezeichnet werden, die in zumindest einem weiteren Teilprogrammen verwendet werden.

Da zur Erzielung der gewünschten Datenabhängigkeit der aufgezeichneten Datenzugriffe, die nicht instrumentierten Teilprogramme keinen Beitrag liefern, ist gemäß einer Weiterbildung vorgesehen, diese nicht instrumentierten Teilprogramme als nicht ausführbar zu kennzeichnen. Zur Bildung des Steuerungsprogramms, beispielsweise zum Übersetzungslauf, ist es zumeist erforderlich, dass alle Teilprogramme verfügbar sind, um somit ein vollständiges Steuerungsprogramm bilden zu können. Da für die nicht instrumentierten Teilprogramme zur Laufzeit am Steuerungssystem keine Daten aufgezeichnet werden, können diese während der Rekonstruktion und der Analyse im Regelfall auch nicht fehlerfrei ausgeführt werden. Gleichzeitig ist ihr Einfluss auf die instrumentierten Teilprogramme aber bereits vollständig in den aufgezeichneten Daten dieser instrumentierten Teilprogramme abgebildet. Die Ausführung der nicht instrumentierten Teilprogramme während der Rekonstruktion und Analyse ist daher weder möglich noch erforderlich. Die Sperre der nicht instrumentierten Teilprogramme spart insbesondere auch Ausführungsressourcen bei der Rekonstruktion und Analyse.

Eine vorteilhafte Weiterbildung erhält man auch dadurch, dass das erste Ablaufprotokoll in einen nicht flüchtigen Speicher mit großer Kapazität übertragen wird, da dadurch insbesondere eine Langzeitaufzeichnung möglich ist. Weiters bleiben die Daten auch nach einer gewollten oder ungewollten Unterbrechung der Stromversorgung erhalten, was insbesondere von Bedeutung ist, da bestimmte Fehlerbilder mit der automatischen oder erzwungenen Abschaltung der Maschine bzw. Anlage verbunden sein können. Aufgrund der sehr geringen aufgezeichneten Datenmenge ist mit dem erfindungsgemäßen Verfahren grundsätzlich eine lange Aufzeichnungsdauer möglich. Der nicht flüchtige Speicher kann beispielsweise ein Magnetspeichermedium sein und bietet somit aufgrund der großen Speicherdichte je Volumenseinheit ausreichend Kapazität für eine Langzeitaufzeichnung. In einer Weiterbildung kann dieser nicht flüchtige Speicher auch koppelbar ausgebildet sein, sodass jederzeit zusätzlichen und/oder alternative nicht flüchtige Speichermedien an das Laufzeitsystem angekoppelt werden können, um somit die Aufzeichnungsdauer zu erhöhen.
Nach einer Weiterbildung wird in der Echtzeit-Aufzeichnungsphase für jedes erste instrumentierte Teilprogramm der jeweilige Zwischenpuffer in ein jeweils eigenständiges erstes Ablaufprotokoll übertragen. Im Hinblick auf die Datenrekonstruktion hat diese Weiterbildung den Vorteil, dass bei der Ermittlung des korrespondierenden Datenwerts jeweils ein erstes Ablaufprotokoll eindeutig zugeordnet ist und somit auch in der Echtzeit-Aufzeichnungsphase die Kennung des zugeordneten, ersten instrumentierten Teilprogramms nicht mit aufgezeichnet werden muss, was sich in einer reduzierten, aufgezeichneten Datenmenge auswirkt und somit wiederum eine Reduktion der zusätzlichen Belastung des Laufzeitsystems durch die Datenaufzeichnung bewirkt.

Zur Reduktion der aufgezeichneten Datenmenge wird gemäß einer Weiterbildung bei der Übertragung des Inhalts des Zwischenpuffers in das erstes Ablaufprotokoll eine verlustfreie Datenkompression durchgerührt. Für diese Datenkompression kann ein bekannter Kompressionsalgorithmus verwendet werden, da die aufgezeichneten Daten zumeist in einer binär codierten Form vorliegen werden und Kompressionsalgorithmen in diesem Fall sehr gut eine Datenreduktion bewerkstelligen können. Da häufig ein erheblicher Anteil der Daten von einem Durchlauf eines Teilprogramms zum nächsten unverändert ist, sich also im Ablaufprotokoll wiederholen, sind ausgesprochen hohe Kompressionsraten und eine dem entsprechend erhebliche Reduktion des erforderlichen Protokollspeichers erzielbar.

Von Vorteil ist ferner eine Weiterbildung, nach der der erste und/oder zweite Hintergrundprozess mit einer Priorität ausgeführt werden, die unter der Ausführungspriorität der einzelnen Teilprogramme liegt. Durch die weiterbildungsgemäße Wahl der Ausfuhrungsprioritäten. insbesondere dadurch, dass der erste und/oder zweite Hintergrundprozess eine Ausführungspriorität aufweist, die unter jener der Teilprogramme liegt, ist sichergestellt, dass die Ausführung eines Teilprogramms niemals durch einen laufenden Hintergrundprozess unterbrochen bzw. verzögert werden kann bzw. ist sichergestellt, dass ein zu startendes Teilprogramm jederzeit einen laufenden Hintergrundprozess unterbrechen kann. Dadurch ist gewährleistet, dass durch die Datenaufzeichnung, insbesondere durch die aufwändigere Übertragung der aufgezeichneten Datenwerte vom Zwischenpuffer in das erste Ablaufprotokoll, die Ausführung des ersten instrumentierten Steuerungsprogramms, insbesondere das Laufzeitverhelten, nicht beeinflusst bzw. verfälscht wird.

Zur Rekonstruktion des Ablaufs der Teilprogramme ist es von Vorteil, wenn bei der Datenrekonstruktion für jede Lese-Wiedergabefunktion und jede Schreib-Aufzeichnungsfunktion, zusätzlich eine eindeutige Kennung der Lese- bzw. Schreiboperation in das zweite Ablaufprotokoll übertragen wird. Dadurch ist gewährleistet, dass im zweiten Ablaufprotokoll eine Kennung vorhanden ist, die direkt einen Rückschluss auf die jeweilige Anweisung erlaubt, welche zur Aufzeichnung des Datenwerts geführt hat. Beispielsweise kann aufgrund von verschachtelten Ablaufanweisungen die Ermittlung der genauen Ausführungsreihenfolge gegebenenfalls schwierig zu ermitteln sein, sodass die Angabe einer Kennung die Ermittlung der ausgeführten Schreib- bzw. Leseaufzeichnungsfunktion vereinfacht.

Zur Vereinfachung des Zurücksetzens und des wiederholten Wiederabspielens einzelner Ausführungsabschnitte ist es von Vorteil, wenn während des Programmlaufs in der Analysephase in regelmäßigen Laufzeitabständen ein gemeinsames Zustandsabbild aller instrumentierten dritten Teilprogramme erstellt wird. Da in der Analysephase keine Einschränkung hinsichtlich der Ausführungszeit besteht, kann beispielsweise die Ausführung des dritten instrumentierten Steuerungsprogramms zu einem Zeitpunkt angehalten werden und ein kompletter Zustand aller Teilprogramme gesichert werden. Ein derartiges Zustandsabbild umfasst ein komplettes Speicherabbild aller instrumentierter Teilprogramme, insbesondere der exklusiven und nicht exklusiven Datenbereiche der einzelnen Teilprogramme und gestattet somit eine jederzeitige Wiederaufnahme der Ausführung ab einem derartigen Zeitpunkt. Dadurch kann während der Analyse bzw. des Debuggens der Programmzeiger sehr rasch in der Ausführungszeit vor und zurück gestellt werden, ohne das Steuerungsprogramm mehrfach über längere Ausführungszeiten ablaufen lassen zu müssen (sog. Time Traveling).

Die Datenrekonstruktion, die Laufzeitkonstruktion sowie die Analysephase kann erfindungsgemäß auf unterschiedlichen Systemen durchgeführt werden, es ist jedoch auch möglich, dies auf einem einzigen System, beispielsweise dem Entwicklungssystem durchzuführen. Wesentlich am erfindungsgemäßen Verfahren ist jedoch, dass lediglich ein einziger Verfahrensschritt, die Echtzeitdatenaufzeichnung, am Laufzeitsystem durchgerührt werden muss, alle weiteren Verfahrensschritte können sozusagen offline durchgeführt werden, wobei hier sowohl im Hinblick auf Verarbeitungsressourcen als auch im Hinblick auf die Ausführungszeit keinerlei Einschränkungen gegeben sind. Es können dadurch alle Vorteile der leistungsfähigen Analysewerkzeuge einer Entwicklungsumgebung genutzt werden bei gleichzeitig authentisch rekonstruiertem Verhalten von Steuerung und gesteuertem System. Darüber hinaus ist die Maschine während der bzw. durch die Fehlersuche nicht blockiert und kann weiterhin im Produktionsprozess verbleiben.

Zum besseren Verständnis der Erfindung wird diese anhand der nachfolgenden Figuren näher erläutert.

Es zeigen jeweils in stark schematisch vereinfachter Darstellung:
- Fig. 1: eine schematische Darstellung des erfindungsgemäßen Verfahrens;
- Fig. 2: eine Darstellung der Verhältnisse bei der Echtzeit-Aufzeichnungsphase;
- Fig. 3: eine Darstellung der Verhältnisse bei der Datenrekonstnrktion;
- Fig. 4: eine Darstellung der Verhältnisse bei der Laufzeitrekonstruktion;
- Fig. 5: eine Darstellung der Verhältnisse bei der Analysephase;
- Fig. 6: eine Darstellung der Verhältnisse bei der Sicherung eines gültigen Zustandsabbilds.

Einführen sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

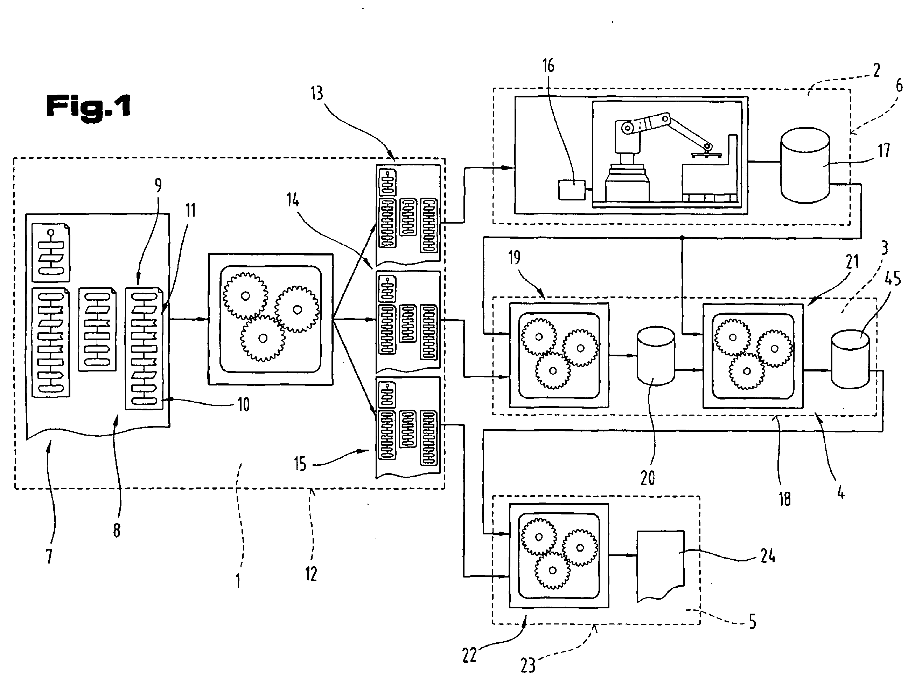

Fig. 1 zeigt ein Überblicksschaubild über das erfindungsgemäße Verfahren. Die einzelnen Verfahrensschritte sind dabei den Ausführungseinheiten zugeordnet, welche den Verfahrensschritt durchführen. Das erfindungsgemäße Verfahren gliedert sich in die Schritte Programminstrumentierung 1, Echtzeit-Aufzeichnungsphase 2, Daten- 3 und Laufzeitrekonstruktion 4, sowie Analysephase 5. Bevorzugt findet die Programminstrumentierung 1 auf einem Entwicklungssystem statt, die Echtzeit-Aufzeichnungsphase 2 wird am bzw. vom Laufzeitsystem ausgeführt, welches Laufzeitsystem die Steuerungsaufgabe der zu steuernden Maschinenanlage bzw. Vorrichtung durchführt. Die Daten- 3 und Laufzeitrekonstruktion 4 wird bevorzugt vom Rekonstruktionssystem ausgerührt, wobei die abschließende Analysephase zumeist auf einem Diagnosesystem zur Ausführung gebracht wird. Bis auf das Laufzeitsystem 6 können alle anderen, oder mehrere der anderen Systeme gegebenenfalls durch ein gemeinsames Computersystem gebildet sein, wesentlich ist jedoch, dass nur die Echtzeit-Aufzeichnungsphase 2 am Laufzeitsystem 6 stattfindet und alle anderen, gegebenenfalls sehr rechenintensiven Ausführungsphasen, vom Laufzeitsystem abgekoppelt stattfinden und ohne Beeinträchtigung des Zeitverhaltens des Laufzeitsystems ausgeführt werden.

Ein Steuerungsprogramm 7 weist zur Durchführung der Steuerungsaufgabe für eine Maschinensteuerung mehrere Teilprogramme 8 auf, wobei jedes Teilprogram durch einen Start- 9 und Endpunkt 10 gekennzeichnet ist und wobei zwischen diesen beiden Punkten Programm-Ablaufanweisungen 11 angeordnet sind. Bei diesen Programm-Ablaufanweisungen 11 gibt es neben programmtechnischen Verarbeitungsanweisungen auch lesende und schreibende Zugriffe auf Datenbereiche bzw. auf Speicherstellen von Datenbereichen, wobei für das erfindungsgemäße Verfahren jene Zugriffe von Bedeutung sind, die auf Datenbereiche zugreifen, die von mehreren Teilprogrammen 8 gemeinsam genutzt werden. Die Zugriffe auf diese gemeinsam genutzten Speicherstellen dienen beispielsweise dem Datenaustausch zwischen den Teilprogrammen oder der zeitlichen Synchronisation von Steuerungsfunktionen, welche in unterschiedlichen Teilprogrammen iniplementiert sind. Die Teilprogramme können nebenllufig aufgeführt werden, d.h. durch abwechselnde Zuteilung einer Prozessorressource quasi parallel oder durch gleichzeitige Zuteilung mehrerer Prozessorressourcen auch tatsächlich parallel ausgeführt werden. Ein wesentlicher Teil der Erfindung liegt nun darin, dass überraschender Weise im Wesentlichen lediglich aus der Aufzeichnung der lesenden Zugriffe auf derartige gemeinsame Datenbereiche während der Ausführung, und durch eine nachgelagerte Datenaufbereitung, ein möglicher, vollständiger Programmlauf einschließlich eines Prozessarbitrierungsschemas rekonstruiert werden kann, welcher die selbe Datenabhängigkeit aufweist, wie der ursprüngliche Programmlauf während der Aufzeichnung. Dies ermöglicht die Analyse von Fehlerbildern, welche ursächlich mit dem Datenaustausch zwischen den Teilprogrammen und dem tatsächlichen zeitlichen Ausführungsschema der Teilprogramme während der Datenaufzeichnung in Verbindung stehen können. ...in Verbindung stehen *können*. Selbstverständlich ist das erfindungsgemäße Verfahren auch dazu geeignet Fehlerbilder analysieren, die nicht mit dem zeitlichen Ausführungsschema in Verbindung stehen. Im Vergleich zu bekannten Lösungen reduziert sich beim erfindungsgemäßen Verfahren die aufzuzeichnende Datenmenge signifikant und reduziert sich insbesondere der Laufzeitaufwand für die Sicherung ganz wesentlich, so dass dadurch weder die Auslastung der Prozessorressourcen im Laufzeitsystem noch dessen Echtzeiteigenschaften maßgeblich beeinträchtigt werden..

Dazu wird das Steuerungsprogramm 7 am Entwicklungssystem 12 analysiert und aufbereitet, wobei Lese- und/oder Schreibzugriffe auf derartige gemeinsam genutzte Datenbereiche durch spezifische Funktionen ersetzt werden und daraus ein erstes 13, ein zweites 14 und drittes 15 instrumentiertes Steuerungsprogramm erstellt wird. Erfindungsgemäß werden dabei jeweils die zu instrumentierenden Teilprogramme durch die entsprechend instrumentierten Teilprogramme ersetzt, wodurch bei der Ausführung in den jeweils nachgelagerten Phasen, ein phasenspezifisches Verhalten gegeben ist. Diese Instrumentierung geschieht automatisch, wobei gegebenenfalls ein Auswahlschritt vorgeschaltet sein kann, in dem ein Entwickler jene Teilprogramme bzw. jene Programmmodule auswählen kann, die zu instrumentierten sind. Vom Entwicklungssystem werden diese bzw. die zu einem Programmmodul gehörende Teilprogramme dann automatisch instrumentiert.

Das erste instrumentierte Steuerungsprogramm 13 wird nun auf das Laufzeitsystem 6 übertragen, beispielsweise mittels einer Datenkommunikationsverbindung bzw. eines Datenträgers und am Laufzeitsystem 6 in einem Speichermittel einer Ablaufsteuerung 16 hinterlegt. Diese Ablaufsteuerung 16 kann nun beispielsweise eine speicherpmgramnnierbare Steuerung (SPS) sein, welche das hinterlegte Steuerungsprogramm ausführt um dadurch eine Maschine oder eine Vorrichtung in der gewünschten Art und Weise zu steuern. Bei der Ausführung des ersten instrumentierten Teilprogramms 13 wird bei Ausführung jeder Lese-Aufzeichnungsfunktion der gelesene Wert zusätzlich zur Programm-Ablaufanweisungstechnischen Funktion des Lesezugriffs, ferner in einen Zwischenspeicher kopiert und anschließend zyklisch durch einen ersten Hintergrundprozess in ein erstes Ablaufprotokoll 17 übertragen. Da aufgrund des erfindungsgemäßen Verfahrens nur eine sehr geringe Datenmenge aufgezeichnet wird, wobei die Aufzeichnung durch die modifizierte Lese-Aufzeichnungsfunktion nur einen sehr geringen Verarbeitungs-Overhead benötigt, kann diese Aufzeichnung kontinuierlich während des Regelbetriebs stattfinden, es ist also nicht erforderlich, ein eigenes Programm zur Fehlersuche auf das Laufzeitsystem zu laden, sondern kann das erste instrumentierte Teilprogramm 13 kontinuierlich und ohne wesentliche Beeinflussung des Laufzeitverhaltens ausgeführt werden.

Tritt am Laufzeitsystem 6 ein Fehler auf, wird zur nachfolgenden Ermittlung der Fehlerursache das erste Ablaufprotokoll 17 auf ein Rekonstruktionssystem 18 übertragen. Bei der Datenrekonstruktion 3 wird das zweite instrumentierte Steuerungsprogramm 14 am Rekonstruktionssystem ausgeführt, wobei Datenwerte von Lese-Wiedergabefunktionen der zweiten instrumentierten Teilprogramme des zweiten instrumentierten Steuerungsprogramms 14, durch die aufgezeichneten Datenwerte des ersten Ablaufprotokolls ermittelt werden und wobei ferner bei Ausführung einer Lese-Wiedergabefunktion und einer Schreib-Aufzeichnungsfunktion, der ermittelte Datenwert mit einer Kennung der Speicherstelle im nicht exklusiven Datenbereich und einer Identifikationskennung des jeweiligen Teilprogramms, in ein zweites Ablaufprotokoll 20 übertragen werden. Damit ist eine eindeutige Zuordnung der Schreib- und Lesezugriffe auf Datenbereiche festgelegt, wobei die Werte der schreibenden Zugriffe durch den Ablauf der zweiten instrumentierten Teilprogramme aus den zuvor aufgezeichneten Datenwerten der Lesezugriffe gebildet werden und somit ein erster Schritt zur Rekonstruktion des ursprünglichen Programmlaufes gegeben ist. Durch diesen ersten Rekonstruktionsschritt werden also zu den ursprünglich aufgezeichneten Lesezugriffen zusätzlich auch noch die Schreibzugriffe auf die nicht exklusiven Speicherstellen ermittelt und aufgezeichnet, sowie eine datentechnische Verknüpfung der reinen Datenwerte zu den jeweiligen Speicherstellen bzw. Variablen hergestellt.

Als nächster Schritt wird die Laufzeitrekonstruktion durchgeführt, bei der das zweite Ablaufprotokoll 20 von einem Zuordnungsmodul 21 analysiert wird. Dabei wird aus den aufgezeichneten Lesezugriffen in den aufgezeichneten Schreibzugriffen eine Übereinstimmung gesucht, sodass ferner unter Berücksichtung hinterlegter Ausführungsbeschränkungen bzw. Prozessorarbitrierungsregeln des Laufzeitsystems, eine widerspruchsfreie Ausführungsreihenfolge der Teilprogramme ermittelt wird und daraus ein drittes Ablaufprotokoll 45 generiert wird. In diesem dritten Ablaufprotokoll 45 sind nun in zeitlich hintereinander gelagerter Reihenfolge die Datenwerte der Lesezugriffe und Ablaufverzweigungsanforderungen hinterlegt, um einen spezifischen Ablauf der einzelnen Teilprogramme zu gewährleisten, welche zu der, in der Echtzeit-Aufzeichnungsphase 2 vorliegenden Datenabhängigkeit führt.

In der Analysephase 5 wird das dritte instrumentierte Teilprogramm 15 von einem Ausführungsmodul 22 des Diagnosesystems 23 abgearbeitet, wobei die Lese- und Schreib-Ablaufsteuerungsfunktionen der dritten instrumentierten Teilprogramme des dritten instrumentierten Steuerungsprogramms 15 das dritte Ablaufprotokoll 45 sequentiell abarbeiten und in einer Vorschau den nächsten hinterlegten Eintrag analysieren und bei einer ermittelten Ablaufverzweigungsanweisung die Ausführungen zu dem entsprechenden Teilprogramm erzwungen wird bzw. bei einem hinterlegten Datenwert dieser in die entsprechende zugeordnete Speicherstelle des Datenbereichs übernommen wird. Für den Entwickler stellt sich der Programmlauf 24 praktisch wie ein realer Programmlauf dar, allerdings mit dem essentiellen Unterschied, dass die Einschränkungen zufolge der Echtzeitanforderungen des Laufzeitsystems entfallen und damit beispielsweise die Programmanweisungen problemlos im Einzelschrittverfahren (Single-Step debugging) abgearbeitet und deren Auswirkung beobachtet werden kann. Weiters werden die Eingangsgrößen für das Steuerungsprogramm anstatt von den diversen Schnittstellen zur Maschinenhardware aus dem dritten Ablaufprotokoll 45 bezogen und wird die Prozessorarbitrierung anstatt durch das Betriebssystem ebenso durch die entsprechenden Anweisungen aus dem dritten Ablaufprotokoll 45 vorgegeben. Die Unterbrechung eines laufenden Teilprogmnuns durch ein anderes, höherpriores Zeitprogramm erfolgt aber am Diagnosesystem 23 nicht unbedingt an der selben Stelle bzw. der selben Programminstruktion, wie beim ursprünglichen Programmlauf am Laufzeitsystem 6, aber zumindest in einem solchen Ausführungsabschnitt, dass der gegenseitige Einfluss von Datenänderungen entsprechend dem ursprünglichen Programmlauf gewahrt ist. Dadurch lassen sich auch solche ansonsten oftmals schwer lokalisierbare Fehler zuverlässig eingrenzen, für deren Auftreten falsch berücksichtigte zeitliche Abhängigkeiten aus der nebenläufigen Ausführung der Teilprogramme ursächlich sind.

Das erfindungsgemäße Verfahren hat nun den ganz besonderen Vorteil, dass mit nur einer sehr geringen aufgezeichneten Datenmenge im ersten Ablaufprotokoll 17, unter Analyse und Aufbereitung des zweiten 14 und dritten 15 instrumentierten Steuerungsprogramms, aus dem ersten Ablaufprotokoll 17 ein virtuelles Ablaufprogramm 24 generiert werden kann, welches die Datenabhängigkeit des ausgeführten, ersten instrumentierten Steuerungsprogramms 13 aufweist. Die gesamte aufwändige Aufbereitung und Analyse wird dabei nicht am Laufzeitsystem 6 durchgeführt, auch ist zur Fehlersuche eine Unterbrechung bzw. ein spezieller Betrieb des Laufzeitsystems nicht erforderlich, da diese Arbeiten ausschließlich von anderen Systemen ausgeführt werden und somit das Laufzeitverhalten des Laufzeitsystems 6 nicht oder nur unwesentlich beeinflusst wird. Dies ist gerade im Hinblick auf die Analyse von Echtzeitsystemen, bei denen es auf eine genaue Einhaltung des Ablaufzeitverhaltens ankommt, von besonderem Vorteil.

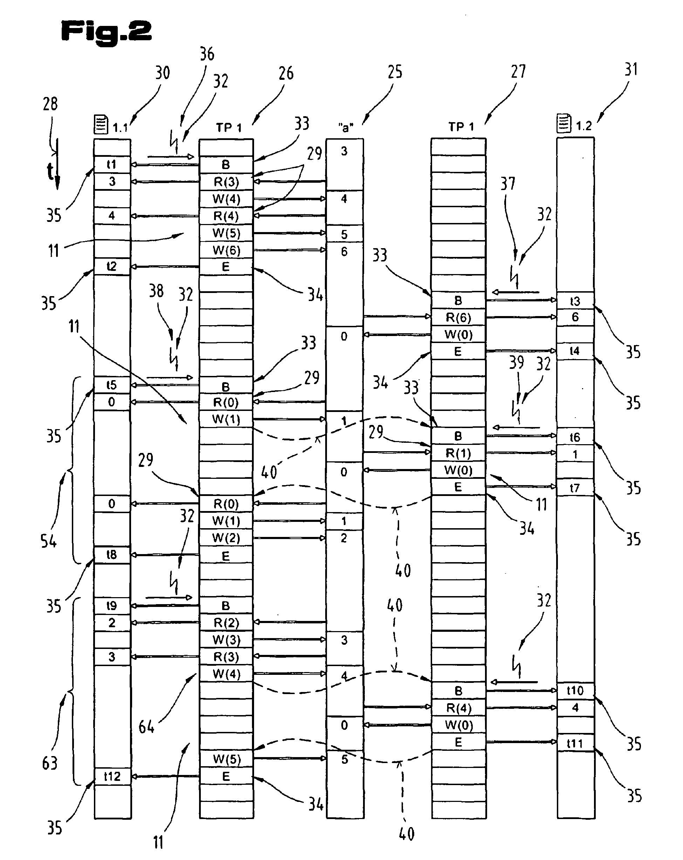

Die Fig. 2 bis 5 zeigen vereinfacht und insbesondere auf eine einzige gemeinsam genutzte Variable "a" reduziert, die Verfahrensschritte von der Echtzeit-Aufzeichnung bis zur Analysephase. Mit diesen Figuren soll dargestellt werden, wie aus den aufgezeichneten Lesezugriffen, insbesondere aus den aufgezeichneten Werten, ein vollständiger Programmlauf rekonstruiert wird. Im dargestellten Beispiel wird eine Variable "a" 25 von einem ersten 26 und einem zweiten 27 Teilprogramm gemeinsam genutzt, also erfolgen von beiden Teilprogrammen schreibende und/oder lesende Zugriffe auf diese Variable. Aufgrund der nebenläufigen Ausführung der Teilprogramme ist nicht sichergestellt, dass jedes Teilprogramm vollständig abgelaufen ist, bevor ein anderes Teilprogramm gestartet wird, insbesondere ist eine Unterbrechung eines laufenden Teilprogramms durch ein höher priorisiertes, anderes Teilprogramm möglich. In den Fig. 2 bis 5 ist der Ablauf der einzelnen Teilprogramme 26, 27 der Speicherinhalt der variablen "a" 25, sowie der Inhalt der jeweiligen erstellten Ablaufprotokolle in fortschreitender Zeit 28 dargestellt. Zur Vereinfachung der Darstellung sind die Programm-Ablaufanweisungen durch eine Schreiboperation "W₀" und eine Leseoperation "R₀" gebildet. In den Klammern ist der jeweils geschriebenen bzw. gelesene Wert angegeben. Die Darstellung "R(a,0)" bzw. "W(a,0)" bedeutet, dass für die Variable "a" der Wert "0" gelesen bzw. geschrieben wird. In den Figuren sind Schreib- bzw. Leseoperationen ggf. ohne Variablenangabe dargestellt, was daher rührt, dass bspw. in der in Fig. 2 dargestellten Echtzeit-Aufzeichnungsphase erfindungsgemäß ausschließlich die Werte aufgezeichnet werden, ohne einen Bezug auf die jeweils betreffende Speicherstelle. Erst bei der Datenrekoristruktion wird die Beziehung zwischen den aufgezeichneten Werten und der Speicherstellen hergestellt. Ebenso ist bei der Ausführung eines Teilprogramms, durch Ausführen der Programm-Ablaufanweisungen, die einem Wert jeweils zugeordnete Speicherstelle durch die Codierung eindeutig festgelegt.

Fig. 2 zeigt nun die Verhältnisse bei der Echtzeit-Aufzeichnungsphase bei der das erste instrumentierte Steuerungsprogramm auf dem Laufzeitsystem ausgeführt wird, insbesondere werden die beiden ersten instrumentierten Teilprogramme 26, 27 ausgeführt und die Lesezugriffe auf die gemeinsam genutzte Variable "a" 25 aufgezeichnet.

Erfindungsgemäß wird bei Ausführung der Lese-Aufzeichnungsfunktion 29 der gelesene Datenwert in einen Zwischenpuffer kopiert und der Inhalt des Zwischenpuffers wird zusammen mit einer eindeutigen Kennung des zugeordneten ersten instrumentierten Teilprogramms, zyklisch durch einen ersten Hintergrundprozess in ein erstes Ablaufprotokoll übertragen. Zur Vereinfachung der Darstellung ist in Fig. 2 das erste Ablaufprotokoll aufgeteilt, um so eine bessere Zuordnung des Protokollinhalts zu dem Ursprung der geschriebenen Datenwerte zu ermöglichen. Insbesondere ist ein erstes Ablaufprotokoll 1.1 30 und ein erstes Ablaufprotokoll 1.2 31 dargestellt, wobei die Datenwerte des ersten Ablaufprotokolls 1.1 30 von ausgeführten Lese-Aufzeichnungsfunktionen 29 des ersten Teilprogramms 26 herrühren, die Datenwerte des ersten Ablaufprotokolls 1.2 31 rühren von den ausgeführten Lese-Aufzeichnungsfunktionen 29 des zweiten Teilprogramms 27 her. Die Inhalte der ersten Ablaufprotokolle 1.1 30 und 1.2 31 entsprechen den Werten, welche in die, den jeweiligen ersten instrumentierten Teilprogrammen zugeordneten Zwischenpuffer geschrieben werden. Erfindungsgemäß kann das erste Ablaufprotokoll alle aufgezeichneten Datenwerte aller instrumentierten Teilprogramm aufweisen, wobei aufgrund der mitaufgezeichneten, eindeutigen Kennung eine eindeutige Zuordnung der Werte zu den einzelnen Teilprogrammen möglich ist. Es ist jedoch auch möglich, dass für jedes Teilprogramm ein einzelnes, erstes Ablaufprotokoll erstellt wird.

Ein wesentliches Merkmal eines derartigen Teilprogramms liegt darin, dass es im Gegensatz zu prozeduralen Steuerungsprogrammen durch ein Ereignis 32 aufgerufen wird und danach die Programm-Ablaufanweisungen 11 zwischen dem Start- 33 und dem Endpunkt 34 ausführt. Ein derartiges Startereignis 32 kann beispielsweise eine Unterbrechungsanforderung durch eine an das Laufzeitsystem angeschlossene Komponente gebildet sein, ferner ist beispielsweise ein zeitgesteuertes Ereignis oder ein, durch ein anderes Teilprogramm ausgelöstes Ereignis möglich. Im dargestellten Fall wird bei Ausführung des Start- 33 bzw. Endpunkts 34 eine Start- bzw. Endkennung in das erste Ablaufprotokoll geschrieben, zur Vereinfachung ist dies in der Fig. 2 jeweils durch einen Zeitstempel 35 dargestellt, wobei dieser Zeitstempel bspw. auch eine fortlaufende Kennung sein kann.

Durch das erste Startereignis 36 wird das erste Teilprogramm 26 gestartet, wobei bei Ausführung des Startpunkts der Zeitstempel 35 t1 in das erste Ablaufprotokoll 1.1 30 geschrieben wird. Eine der vom ersten Teilprogramm 26 ausgeführten Programmablaufanweisungen 11 ist beispielsweise eine Lese-Aufzeichnungsfunktion 29, welche den zu diesem Zeitpunkt gültigen Wert "3" der Variablen "a" 25 liest und in das erste Ablaufprotokoll 1.1 überträgt. Eine weitere Programm-Ablaufanweisung 11 schreibt den Wert "4" in die Variablen "a". Die darauf folgende Lese-Aufzeichnungsfunktion wird den Wert "4" als den zu diesem Zeitpunkt gültigen Wert der Variablen "a" lesen und in das erste Ablaufprotokoll 1.1 übertragen. Eine weitere Schreiboperation des ersten Teilprogramms wird den Wert "5" in die Variable "a" schreiben und das erste Teilprogramm beenden, wobei bei Abarbeitung des Endpunkts 34 ein Zeitstempel t2 in das erste Ablaufprotokoll 1.1 geschrieben wird. Das erste Teilprogramm 26 ist daraufhin in einem Wartezustand bis zum nächsten Startereignis.

Aufgrund der nebenläufigen Ausführung der Teilprogramme wird bei einem zweiten Startereignis 37 das zweite Teilprogramm 27 gestartet, welches durch Ausführen der Lese-Aufzeichnungsfunktion 29 den Wert "5" für die Variable "a" 25 liest und in das erste Ablaufprotokoll 1.2 31 überträgt. Eine nachfolgende Schreiboperation belegt die Variable "a" mit dem Wert "0". Durch Ausführung des Start- 33 und Endpunkts 34 des zweiten Teilprogramms 27 werden wiederum Zeitstempel 35 in das erste Ablaufprotokoll 1.2 31 geschrieben. Auch das zweite Teilprogramm 27 ist nach Ausführung des Endpunktes 34 im Wartezustand auf das Eintreffen eines weiteren Startereignisses.

Durch Eintreffen eines dritten Startereignisses 38 wird die Ausführung des ersten Teilprogramms 26 erneut ausgelöst, wobei hier nun der Fall gegeben ist, dass während der Ausführung des ersten Teilprogramms 26, für das zweite Teilprogramm 27 ein viertes Startereignis 39 eintritt und aufgrund der hinterlegten Ausführungsprioritäten, das zweite Teilprogramm 27 die Ausführung des ersten Teilprogramm 26 unterbricht, die hinterlegten Programm-Ablaufanweisungen ausführt und nach Beendigung die Ausführung des ersten Teilprogramm 26 fortgesetzt wird. Diese Unterbrechung 40 der Ausführungsreihenfolge hat nun zur Folge, dass sich der Wert der Variablen "a" durch die Schreiboperation des zweiten Teilprogramms 27 quasi während der Ausführung des ersten Teilprogramms 26 ändert.

Diese Änderung des Ausführungsablaufs ist aus den aufgezeichneten ersten Ablaufprotokollen 30, 31 direkt nicht zu erkennen, wird jedoch in den weiteren erfindungsgemäßen Verfahrensschritten rekonstruiert. Bei Betrachtung des ersten Ablaufprotokolls 1.1 für den ersten Unterbrechungsabschnitt 54 könnte man vermuten, dass sich der Wert der Variablen "a" nicht ändert, da beide aufgezeichneten Werte "0" sind. Bei Berücksichtigung der Programm-Ablaufanweisungen 11 des ersten Teilprogramms 26 erkennt man jedoch, dass der Wert "1" in die Variable "a" geschrieben wird. Damit die nachfolgende Lese-Aufzeichnungsfunktion den Wert "0" lesen kann, muss also dazwischen der Wert der Variablen "a" von außerhalb des ersten Teilprogramms geändert werden. Dies wird in den nachfolgenden Verfahrensschritten rekonstruiert.

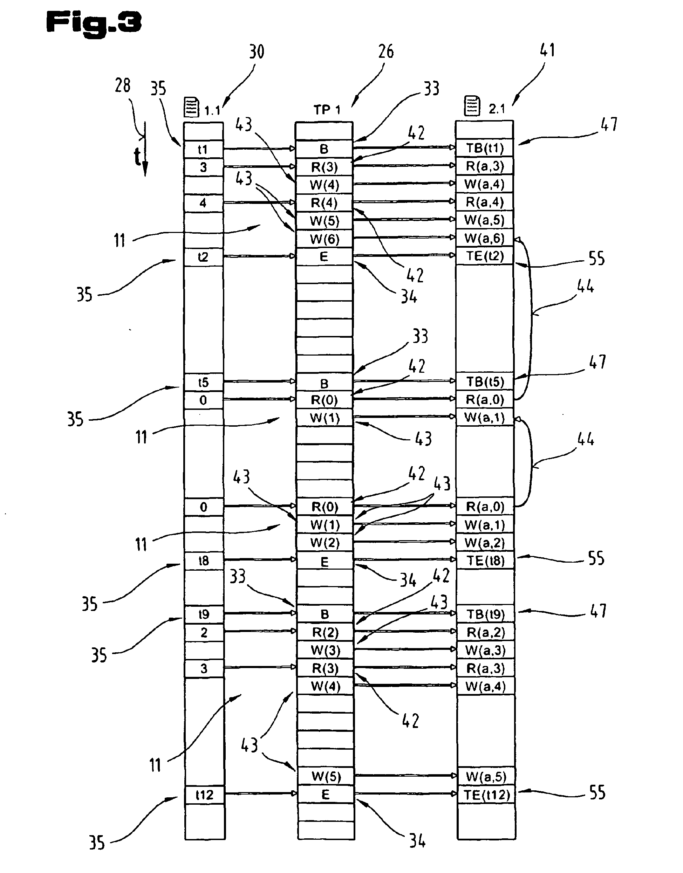

In dem im weiteren Zeitverlauf dargestellten zweiten Unterbrechungsabschnitt 63 ist der Vollständigkeit halber ein Taskwechsel dargestellt, der sich im Wesentlichen vergleichbar zum Unterbrechungsabschnitt 54 darstellt, allerdings mit dem Unterschied, dass das erste Teilprogramm 26 an einer anderen Stelle, nämlich vor einer Schreiboperation 64 durch das erste Teilprogramm 27 unterbrochen wird. Die Verhältnisse bei der Aufzeichnung, Rekonstruktion und Analyse sind jedoch weitgehend analog zum ersten Unterbrechungsabschnitt 54, so dass auf eine detaillierte Beschreibung verzichtet wird. Gleiches gilt für die Figuren 3 bis 5.

Der ganz besondere Vorteil des erfindungsgemäßen Verfahrens liegt darin, dass in der Echtzeit-Aufzeichnungsphase am Laufzeitsystem der Mehrbedarf an Verarbeitungskapazität und eine dadurch mögliche Beeinflussung des Ausführungszeitverhaltens sehr gering gehalten werden kann. Die nachfolgenden, aufwändigen Rekonstruktion- bzw. Analyseschritte werden abseits des Laufzeitsystems durchgeführt, wo insbesondere keine Ausführungszeitbeschränkungen gegeben sind.

Im nachfolgenden Verfahrensschritt der Datenrekonstruktion wird das erste Ablaufprotokoll vom Laufzeitsystem auf ein Rekonstruktionssystem übertragen und das zweite instrumentierte Steuerungsprogramm ausgeführt und dabei eine Beziehung zwischen den aufgezeichneten Werten des ersten Ablaufprotokolls und den gemeinsam genutzten Datenbereichen des entsprechenden Teilprogramms hergestellt. Dies ist für ein Teilprogramm in der Fig. 3 dargestellt.

Wesentlich in diesem Schritt ist, dass bei Ausführung eines Lesezugriffs auf einen nicht exklusiven Datenbereich, der gelesene Datenwert aus dem zuvor aufgezeichneten ersten Ablaufprotokoll entnommen wird. Da im ersten Ablaufprotokoll 1.1 30 die gelesenen Werte in ihrer sequentiellen Abfolge exakt den im ersten Teilprogramm 26 vorkommenden Lesezugriffen entsprechen, kann somit ein direkter Zusammenhang zwischen dem aufgezeichneten Datenwert und der, diesem Datenwert zugeordneten Speicherstelle hergestellt werden. In der Fig. 3 ist das erste Ablaufprotokoll 1.1 30 und das zweite Ablaufprotokoll 2.1 41 aufbereitet dargestellt, sodass nur jene Inhalte dargestellt sind, die das erste Teilprogramm 26 betroffen.

Bei Ausführung der Lese-Wiedergabefunktion 42 wird der jeweils korrespondierende Datenwert aus dem ersten Ablaufprotokoll 1.1 30 entnommen und zusammen mit der Identificationskennung der Speicherstelle in das zweite Ablaufprotokoll 2.1 41 geschrieben. Ebenso wird bei Ausführung jeder Schreib-Aufzeichnungsfunktion 43 der zu schreibende Datenwert zusammen mit einer Identifikationskennung der Speicherstelle in das zweite Ablaufprotokoll 2.1 geschrieben. Da die Datenwerte der Lese-Wiedergabefunktion 42 den zuvor in der Echtzeitphase aufgezeichneten Datenwerten entsprechen, werden auch die Datenwerte der Schreib-Aufzeichnungsfunktionen 43 exakt jenen Werten entsprechen, die zuvor in der Echtzeit-Ausführungsphase gegeben waren, da die Programm-Ablaufanweisungen 11 sich nicht von denen der Echtzeitaufzeichnungsphase unterscheiden. Im zweiten Ablaufprotokoll 2.1 41 ist nun für ein Teilprogramm, im Beispiel das erste Teilprogramm 26, exakt jene Datenabfolge gegeben, wie sie auch in der Echtzeit-Ausführung gegeben war.

Ferner wird bei Ausführung des Start- 33 bzw. Endpunktes 34 der aufgezeichnete Zeitstempel 35 aus dem ersten Ablaufprotokoll 1.1 30 ausgelesen und als Teilprogramm-Startpunkt 47 bzw. Endpunkt 55 in das zweite Ablaufprotokoll 2.1 41 geschrieben. Somit spiegelt das zweite Ablaufprotokoll einen Ablauf wieder, wie er bei der Echtzeit-Aufzeichnung gegeben war, da die selbe Datenabhängigkeit gegeben ist.

Bei Betrachtung der Werte für die Variable "a" im zweiten Ablaufprotokoll 2.1 gibt es im dargestellten Beispiel zwei Situationen, bei dem eine fehlerhafte Datenabhängigkeit 44 gegeben ist, beispielsweise wird von einer Schreib-Aufzeichnungsfunktion 43 der Wert "6" in die Variable "a" geschrieben, die nächste Lese-Wiedergabefunktion 42 liest jedoch den aufgezeichneten Wert "0" für die Variablen "a". Gleiches gilt für die nachfolgende fehlerhafte Datenabhängigkeit 44, wo die Schreib-Aufzeichnungsfunktion 43 den Wert "1" in die Variable "a" schreibt, die nachfolgende Lese-Wiedergabefunktion 42 liest jedoch den aufgezeichneten Wert "0" für die Variable "a". Im Zeitraum zwischen diesen fehlerhaften Datenabhängigkeiten 44 muss also zwangsweise der Wert der Speicherstelle "a" verändert worden sein, beispielsweise durch ein anderes Teilprogramm.

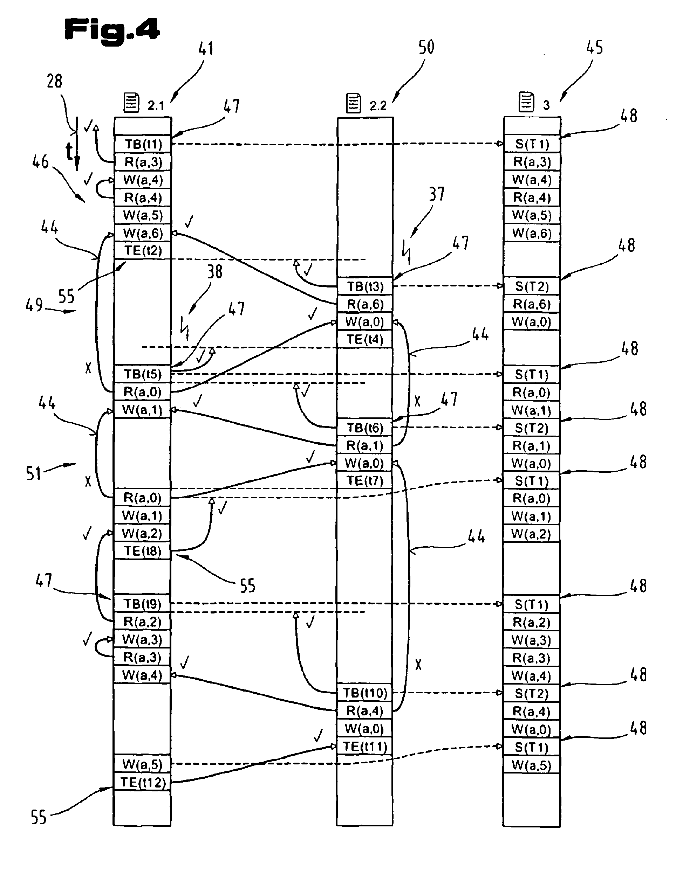

Die ablaufgemäße Beziehung zwischen den einzelnen Teilprogrammen, also die Ablaufreihenfolge, wird im nächsten erfindungsgemäßen Verfahrensschritt, der Laufzeitrekonstruktion, durch Analyse der zweiten Ablaufprotokolle hergestellt, wobei dabei ein drittes Ablaufprotokoll 45 erstellt wird, wie dies in Fig. 4 dargestellt ist.

Im dritten Ablaufprotokoll 45 sind sequentiell die Datenwerte der Lesezugriffe auf gemeinsam genutzte Datenbereiche und eine Information, welches Teilprogramm die jeweils nachfolgenden Datenwerte betrifft, hinterlegt. Im ersten Abschnitt 46 ist eine konsistente Datenabhängigkeit gegeben, sodass die Datenwerte aus dem zweiten Ablaufprotokoll 2.1 41 in das dritte Ablaufprotokoll 45 übertragen werden können. Zur Vereinfachung der Darstellung, um nicht die Figur durch eine Vielzahl von Verbindungslinien unleserlich zu machen, ist dies nur für die Ablaufverzweigungsanweisung 48 dargestellt. Eine konsistente Datenabhängigkeit bedeutet, dass es zu einer Leseoperation auf eine Variable eine unmittelbar vorangehende Schreiboperation auf diese Variable gibt, die den gelesenen Wert in die Variable schreibt. Um für den nachfolgenden Analyseschritt festlegen zu können welches Teilprogramm die im dritten Ablaufprotokoll 45 hinterlegten Datenwerte betrifft, wird aus einem aufgezeichneten bzw. ermittelten Teilprogramm Startpunkt 47 eine Ablaufverzweigungsanweisung 48 in das dritte Ablaufprotokoll 45 geschrieben. Diese Ablaufverzweigungsanweisung enthält bevorzugt eine Kennung des entsprechenden Teilprogramms, sodass nachfolgend in der Analysephase das entsprechende Teilprogramm ausgeführt und mit Werten aus dem dritten Ablaufprotokoll 45 versorgt werden kann.

Im zweiten Abschnitt 49 gilt es eine fehlerhafte Datenabhängigkeit 44 zu lösen. Dazu wird in allen zweiten Ablaufprotokollen eine Übereinstimmung der Datenwerte gesucht, welche auf die Datenabfolge der fehlerhaften Datenabhängigkeit passt. Ferner muss der Teilprogramm-Startpunkt 47 derart gelagert sein, dass dieser in den Zeitraum passt, in dem die fehlerhafte Datenabhängigkeit zu beheben ist. Der Teilprogramm-Startpunkt 47 des zweiten Teilprogramms, der Eintrag "TB(t3)" aus dem zweiten Ablaufprotokoll 2.2 50 liegt vor dem Teilprogramm-Startpunkt 47 des ersten Teilprogramms "TB(t5)" und nach dem Teilprogramm-Endpunkts 55 des ersten Teilprogramm "TE(t2)".

Im dargestellten zweiten Ablaufprotokoll 2.2 50, welches die aufgezeichnete bzw. rekonstruierte Datenabhängigkeit des zweiten Teilprogramms enthält, findet sich nun ein Lesezugriff auf die Variable "a", welcher den Wert "6" liest und nachfolgend ein Schreibzugriff, welcher den Wert "0" schreibt. Da durch eine zwischengeschaltete Ausführung des zweiten Teilprogramms, die fehlerhafte Datenabhängigkeit 44 im zweiten Abschnitt 49 behoben ist, wird der Teilprogrammstartpunkt 47 des zweiten Teilprogramms als Ablaufverzweigungsanweisung 48 in das dritte Ablaufprotokoll 45 geschrieben. Nach Aufzeichnung des gelesenen Datenwerts des zweiten Teilprogramms muss zur Erreichung einer gültigen Datenabhängigkeit, wiederum ein Wechsel zum ersten Teilprogramm erfolgen, sodass in das dritte Ablaufprotokoll 45 eine Ablaufverzweigungsanweisung 48 eingefügt wird, um hier den Wechsel auf das erste Teilprogramm festzulegen.

Wesentlich am erfindungsgemäßen Verfahren ist, dass dieser rekonstruierte Ablauf ein möglicher Ablauf ist, der zu der aufgezeichneten Datenabhängigkeit führt. Die Programmstelle an der ein Teilprogramm durch ein anderes unterbrochen wird, kann u.U. nicht exakt bestimmt werden. Die rekonstruierte Unterbrechung erfolgt aber zumindest rechtzeitig vor jener Schreib- oder Leseoperation auf eine gemeinsam genutzte Variable, durch welche eine Datenabhängigkeit der beiden Teilprogramme gegeben ist. Die Verschachtelung mit gegebenenfalls existierenden weiteren Teilprogrammen, zu denen keine tatsächliche Datenabhängigkeit besteht, wird möglicherweise nicht korrekt, sondern nur näherungsweise anhand der Beginn- und Endzeitpunkte rekonstruiert.

Auch im dritten Abschnitt 51 ist eine fehlerhafte Datenabhängigkeit 44 gegeben, die wiederum durch eine Datenabhängigkeit des zweiten Teilprogramms, insbesondere durch Analyse des zweiten Ablaufprotokolls 2.2 50 behoben werden kann. Die Betrachtung der Behebung der fehlerhaften Datenabhängigkeiten ist gegenseitig austauschbar, da fehlerhafte Datenabhangigkeiten 44 im zweiten Ablaufprotokoll 2.2 50 durch eine Datenabhängigkeit des ersten Teilprogramms, aus dem zweiten Ablaufprotokoll 2.1 41 behoben werden können.

Beim zugrunde liegenden Beispiel gibt es zwei Arten, wie eine fehlerhafte Datenabhängigkeit entstehen kann, siehe dazu auch Fig. 2. Im zweiten Abschnitt 49 tritt nach Beendigung des ersten Teilprogramms das Startereignis 37 für das zweite Teilprogramm ein, so dass dieses abgearbeitet wird. Nach dem Endpunkt befindet sich das zweite Teilprogramm bis zum Eintreffen des nächsten Starereignisses in Ruhe. Zeitlich nachgelagert tritt für das erste Teilprogramm das Startereignis 38 ein, so dass dieses abgearbeitet wird. Grundlegend ist hier, dass die beiden Teilprogramme hintereinander ausgeführt werden, also keine Unterbrechung eines ausgeführten Teilprogramms erfolgt. Hier wird jeweils durch Ausführung des Teilprogramm-Startpunkts 47 eine Ablaufverzweigungsanweisung 48 in das dritte Ablaufprotokoll 45 geschrieben.

Im dritten Abschnitt 51 liegt nun eine Unterbrechung vor, bei der das zweite Teilprogramm die Ausführung des ersten unterbricht. Hier muss nach Ende des unterbrechenden Teilprogramms automatisch wieder zurück zum unterbrochenen Teilprogramm gewechselt werden, wobei dann allerdings der Teilprogramm-Startpunkt nicht mehr ausgeführt wird, da am Unterbrechungspunkt fortgefahren wird. Während der Aufzeichnungsphase am Laufzeitsystems werden die Taskwechsel durch bestimmte eintretende Ereignisse ausgelöst und durch das Betriebssystem und die Prozessorressource abgewickelt, insbesondere werden Informationen über die unterbrochene Stelle abgespeichert und nach vollständiger Abarbeitung des unterbrechenden Teilprogramms die Programmausführung automatisch an der zuvor unterbrochenen Stelle fortgesetzt. Während der Analysephase erfolgen die rekonstruierten Taskwechsel jedoch vorzugsweise durch explizites Stillsetzen des einen und Aktivieren des anderen Teilprogramms, d.h. durch programmgesteuertes Verändern der Ausführungsstati der jeweiligen Teilprogramme. Bei diesem Vorgehen erfolgt die Fortsetzung an der zuvor unterbrochenen Programmstelle nach der vollständigen Ausführung des unterbrechenden Teilprogramms jedoch nicht mehr automatisch, sondern muss diese ebenfalls durch erneute programmgesteuerte Änderung der Ausführungsstati herbeigeführt werden. Dazu wird auch für die Rückkehr an die Unterbrechungsstelle eine Ablaufverzweigungsanweisung 48 in das dritte Ablaufprotokoll eingetragen, welche während der Analysephase beim Erreichen des Endpunktes 34 eines Teilprogramms gelesen und ausgerührt wird.

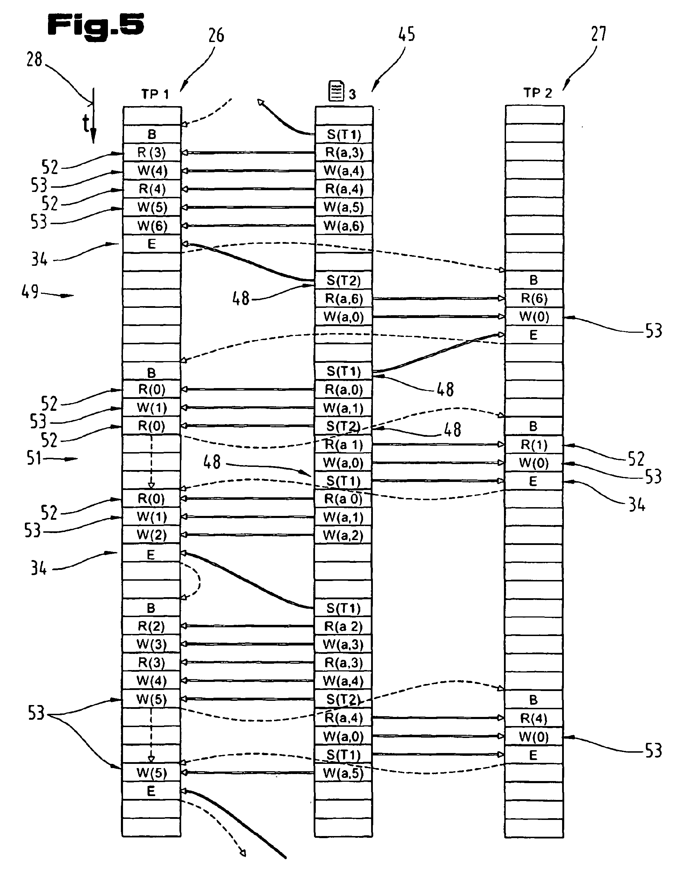

Fig. 5 zeigt nun die Situation in der Analysephase, bei der das dritte instrumentierte Steuerungsprogramm auf einem Diagnosesystem zur Ausführung gebracht wird und dessen Ausführungsverhalten hinsichtlich möglicher Fehler untersucht wird, wobei bei der Ausführung der Lese- und Schreib-Ablaufsteuerungsfunktionen der dritten instrumentierten Teilprogramme, sequentiell auf das dritte Ablaufprotokoll zugegriffen wird. Dabei wird jeweils der nächste Eintrag aus dem dritten Ablaufprotokoll gelesen und geprüft, ob es sich bei diesem Eintrag um eine Ablaufverzweigungsanweisung 48 handelt und wenn ja, wird ein Wechsel zu dem Teilprogramm erzwungen, dessen Kennung in der Ablaufverzweigungsanweisung hinterlegt ist.

Im zweiten Abschnitt 49 wurde während dem ursprünglichen Programmlauf in der Aufzeichnungsphase nach Ende des ersten Teilprogramms 26 das zweite Teilprogramm 27 aufgrund des Eintretens der Startbedingung ausgerührt. Bei der Programmausführung während der Analysephase wird nun zur Nachstellung des ursprünglichen Programmlaufs die im dritten Ablaufprotokoll hinterlegte Ablaufverzweigungsanweisung 48 bei der Ausführung des Endpunktes 34 aus dem Protokoll gelesen und eine Verzweigung zu dem Teilprogramm durchgeführt. Im dritten Abschnitt 51 wird das laufende erste Teilprogramm 26 durch das zweite Teilprogramm 27 unterbrochen. Hier ermittelt die Lese-Ablaufsteuerungsfunktion 52 als nächsten Eintrag im dritten Ablaufprotokoll 45 eine Ablaufverzweigungsanweisung 48 "S(T2)" und initiiert somit den Ausführungswechsel. Nach Beendigung des zweiten Teilprogramms 27 wird bei Ausführung des Endpunkts 34 ebenfalls eine Ablaufveizweigungsanweisung 48 "S(T1)" aus dem dritten Ablaufprotokoll 45 gelesen und somit der Rücksprung zum unterbrochenen ersten Teilprogramm 26 durchgerührt. Zu beachten ist hier, dass an den Punkt der Unterbrechung zurückgesprungen wird, also im dargestellten Fall die LeseAblaufsteuerungsfunktion 52 erneut bzw. weiter ausgerührt wird. In der Fig. 5 sind dafür zwei einzelne Funktionen dargestellt, obwohl es sich tatsächlich um dieselbe, aber unterbrochene Funktion handelt. In der Figur nachfolgend ist dies auch für eine unterbrochene Schreib-Ablaufsteuerungsfunktion 53 "W(5)" dargestellt, die wiederum durch das zweite Teilprogramm unterbrochen wird und nach dessen Ausführungsende weiter ausgeführt wird.

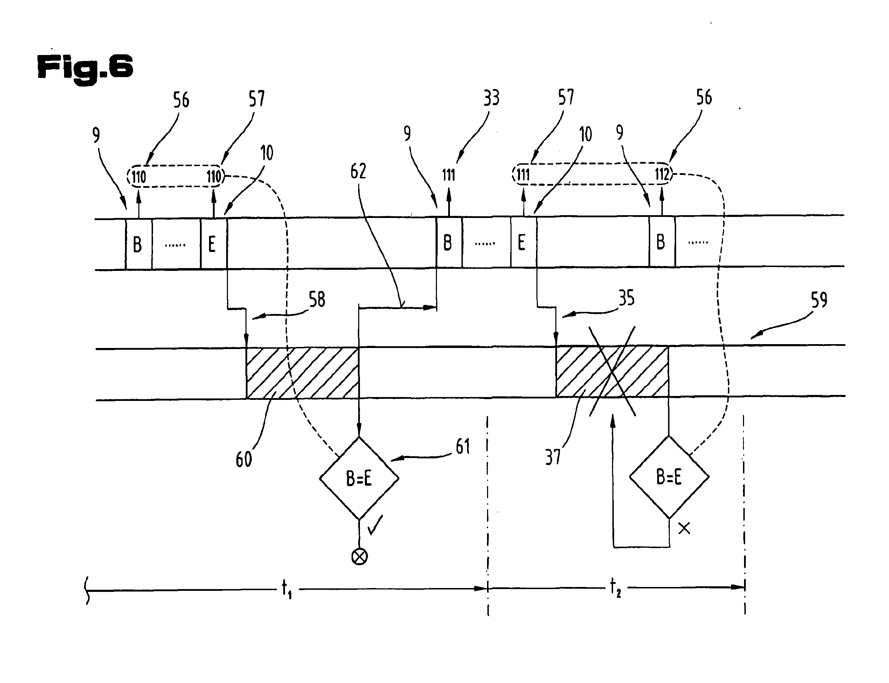

Fig. 6 zeigt schematisch den Ablauf der Erstellung eines gültigen Speicherabbilds eines Teilprogramms. Dabei wird bei Ausführung eines Startpunkts 9 eine Startkennung 56 gesetzt, beispielsweise hochgezählt. Nach Ausführung des Teilprogramms wird der Endpunkt 10 ausgeführt und eine Endkennung 57 ebenfalls gesetzt bzw. hochgezählt. Nach dem Ende 10 des Teilprogramms wird eine Zustandssicherung initiiert 58, die zeitlich asynchron von einem zweiten Hintergrundprozess 59 durchgeführt wird. Dabei wird ein Zustandsabbild 60 des Teilprogramms in einem Zwischenspeicher kopiert und nach Abschluss des Sicherungsvorgangs ein Vergleich 61 der Startkennung zum Endzeitpunkt der Sicherung 56 und Endkennung 57 zum Startzeitpunkt der Sicherung durchgeführt. Wurde die Zustandssicherung abgeschtossen, bevor das betreffende Teilprogramm erneut gestartet wurde, wurde also das Speicherabbild in der Zwischenzeit durch das ablaufende Teilprogramm nicht geändert, werden die Start- und Endkennung 56, 57 übereinstimmen und das gesicherte Speicherabbild kann somit verwendet werden. Diese Situation ist in Fig. 3 im Abschnitt t1 dargestellt, wobei vereinfacht ausgedrückt, zwischen dem Ende des Sicherungsvorgangs und dem nächsten Beginn des betreffenden Teilprogramms eine Zeitspanne 62 liegen muss, die größer gleich 0 ist.

Im Abschnitt t2 ist die Situation dargestellt, dass während einer Sicherung des Speicherabbilds das betreffende Teilprogramm erneut gestartet wurde. Der Vergleich am Ende des Sicherungsvorgangs schlägt nun fehl, da im dargestellten Fall die Startkennung 56 den Wert "112" und die Endkennung 57 den Wert "111" aufweist und somit eindeutig festgestellt werden kann, dass seit Beginn des Sicherungsvorgangs das betreffende Teilprogramm gestartet wurde und somit das Speicherabbild 60 ungültig ist und verworfen wird.

Da ein gesichertes Speicherabbild einen Ist-Zustand des betreffenden Teilprogramms zu einem definierten Zeitpunkt enthält, kann in der Analysephase das dritte instrumentierte Steuerungsprogramm im Wesentlichen zu einem beliebigen Zeitpunkt gestartet werden, ohne das Steuerungsprogramm vom Beginn an auszuführen und das gesamte dritte Ablaufprotokoll abarbeiten zu müssen. Dazu wird ein Startzeitpunkt festgelegt, wobei vom Diagnosesystem das jeweils letzte, vor diesem Zeitpunkt liegende Speicherabbild der einzelnen instrumentierten Teilprogramme ermittelt wird und die jeweiligen Teilprogramme sodann mit dem gesicherten Zustand vorbelegt werden und die Ausführung ab dem gewünschten Zeitpunkt beginnen kann. Gerade bei sehr selten auftretenden Fehlern hat dies den besonderen Vorteil, dass der Startzeitpunkt im Wesentlichen frei wählbar ist und insbesondere nicht eine Abarbeitung des gesamten aufzeichneten Programmlaufs erforderlich ist.

Die Ausführungsbeispiele zeigen mögliche Ausführungsvarianten des Verfahren zum selektiven Aufzeichnen, Rekonstruieren und Analysieren des Programmlaufs eines Steuerungsprogramms, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Verfahrens diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 6 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Programminstrumentierung | 39 | Startereignis 4 |
| 2 | Echtzeit-Aufzeichnungsphase | 40 | Unterbrechung, Wechsel der Teil-programmausführung |
| 3 | Datenrekonstruktion | | |
| 4 | Laufzeitrekonstruktion | | |
| 5 | Analysephase | 41 | Zweites Ablaufprotokoll 2.1 |
| | | 42 | Lese-Wiedergabefunktion |
| 6 | Laufzeitsystem | 43 | Schreib-Aufzeichnungsfunktion |
| 7 | Steuerungsprogramm | 44 | Fehlerhafte Datenabhängigkeit |
| 8 | Teilprogramme | 45 | Drittes Ablaufprotokoll |
| 9 | Startpunkt | | |
| 10 | Endpunkt | 46 | Erster Abschnitt |
| | | 47 | Teilprogramm-Startpunkt |
| 11 | Programm-Ablaufanweisungen | 48 | Ablaufverzweigungsanweisung |
| 12 | Entwicklungssystem | 49 | Zweiter Abschnitt |
| 13 | Erstes instrumentierte Steuerungs-programm | 50 | Zweites Ablaufprotokoll 2.2 |
| 14 | Zweites instrumentierte Steuerungs-programm | 51 | Dritter Abschnitt |
| | | 52 | Lese- Ablaufsteuerungsfunktion |
| 15 | Drittes instrumentierte Steuerungs-programm | 53 | Schreib- Ablaufsteuerungsfunktion |
| | | 54 | Erster Unterbrechungsabschnitt |
| | | 55 | Teilprogramm-Endpunkt |
| 16 | Ablaufsteuerung | | |
| 17 | Erstes Ablaufprotokoll | 56 | Startkennung |
| 18 | Rekonstruktionssystem | 57 | Endkennung |
| 19 | Ausführungsmodul | 58 | Auslösen der Zustandssicherung |
| 20 | Zweites Ablaufprotokoll | 59 | Zweiter Hintergrundprozess |
| | | 60 | Zustandsabbild |
| 21 | Zuordnungsmodul | | |
| 22 | Ausführungsmodul | 61 | Vergleich |
| 23 | Diagnosesystem | 62 | Zeitspanne |
| 24 | Virtuelles Ablaufprogramm | 63 | Zweiter Unterbrechungsabschnitt |
| 25 | Variable "a" | 64 | Schreiboperation |
| | | | |
| 26 | Erstes Teilprogramm | | |
| 27 | Zweites Teilprogramm | | |
| 28 | Zeitstrahl | | |
| 29 | Lese-Aufzeichnungsfunktion | | |
| 30 | Erstes Ablaufprotokoll 1.1 | | |
| | | | |
| 31 | Erstes Ablaufprotokoll 1.2 | | |
| 32 | Startereignis | | |
| 33 | Startpunkt | | |
| 34 | Endpunkt | | |
| 35 | Zeitstempel | | |
| | | | |
| 36 | Startereignis 1 | | |
| 37 | Startereignis 2 | | |
| 38 | Startereignis 3 | | |

## Patentansprüche

1. Verfahren zum selektiven Aufzeichnen, Rekonstruieren und Analysieren des Programmlaufs eines Steuerungsprogramms (7), welches Steuerungsprogramm (7) auf einem Laufzeitsystem (6) ausgerührt wird,
wobei das Steuerungsprogramm (7) eine Mehrzahl von abgeschlossenen Teilprogrammen (8) aufweist,
und ein Teilprogramm (8) durch einen Start- (9) und einen Endpunkt (10) mit dazwischen angeordneten Programm-Ablaufanweisungen (11) gebildet ist wobei jedem Teilprogramm (8) nicht exklusive Datenbereiche zugeordnet sind, auf welche durch zumindest ein weiteres Teilprogramm und/oder einen externen Prozess schreibend zugegriffen wird,
**gekennzeichnet durch** die Schritte:
Programminstrumentierung (1), Echtzeit-Aufzeichnungsphase (2), Datenrekonstruktion (3), Laufzeitrekonstruktion (4) und Analysephase (5),
wobei bei der Programminstrumentierung (1)
automatisch von einem Entwicklungssystem (12) für mehrere zu instrumentierende Teilprogramme (8) des Steuerungsprogramms (7) jeweils alle Lese- und Schreibzugriffe auf nicht-exklusive Datenbereiche ermittelt werden und jeweils
- ein erstes instrumentiertes Teilprogramm generiert wird, indem jeder ermittelte Lesezugriff **durch** eine Lese-Aufzeichnungsfunktion ersetzt wird, und
ein erstes instrumentiertes Steuerungsprogramm (13) gebildet wird, indem das jeweilige zu instrumentierende Teilprogramm **durch** das erste instrumentierte Teilprogramm ersetzt wird;
- ein zweites instrumentiertes Teilprogramm generiert wird, indem jeder ermittelte Lesezugriff **durch** eine Lese-Wiedergabefunktion
und jeder ermittelte Schreibzugriff **durch** eine Schreib-Aufzeichnungsfunktion ersetzt wird, und
ein zweites instrumentiertes Steuerungsprogramm (14) gebildet wird, indem das jeweilige zu instrumentierende Teilprogramm **durch** das zweite instrumentierte Teilprogramm ersetzt wird;
- ein drittes instrumentiertes Teilprogramm generiert wird, indem jeder ermittelte Lese- bzw. Schreibzugriff **durch** eine Lese- bzw. Schleib-Ablaufsteuerungsfunktion ersetzt wird, und
ein drittes instrumentiertes Steuerungsprogramm (15) gebildet wird, indem das jeweilige zu instrumentierende Teilprogramm **durch** das dritte instrumentierte Teilprogramm ersetzt wird;
wobei bei der Echtzeit-Aufzeichnungsphase (2)
das erste instrumentierte Steuerungsprogramm (13) auf dem Laufzeitsystem (6) ausgeführt wird,
und wobei bei Ausführung der Lese-Aufzeichnungsfunktion der gelesene Datenwert in einen, dem jeweiligen ersten Teilprogramm exklusiv zugeordneten Zwischenpuffer kopiert wird
und der Inhalt des Zwischenpuffers zusammen mit einer eindeutigen Kennung des zugeordneten ersten instrumentierten Teilprogramms, zyklisch **durch** einen ersten Hintergrundprozess in ein erstes AblaufprotokoU (17) übertragen wird;
wobei bei der Datenrekonstruktion (3)
das erste Ablaufprotokoll (17) vom Laufzeitsystem (6) auf ein Rekonstruktionssystem (18) übertragen wird,
und das zweite instrumentierte Steuerungsprogramm (14) am Rekonstruktionssystem (18) ausgeführt wird, wobei bei Ausführung eines spezifischen zweiten instrumentierten Teilprogramms,
- für jede Lese-Wiedergabefunktion
- der Datenwert aus einem korrespondierenden Datenwert aus dem ersten Ablaufprotokoll (17) ermittelt wird
- und zusammen mit einer Identifikationskennung der Speicherstelle im nicht exklusiven Datenbereich und einer Identifikationskennung des jeweiligen instrumentierten Teilprogramms, in ein zweites Ablaufprotokoll (20) übertragen wird,
- für jede Schreib-Aufzeichnungsfunktion
- der Datenwert gemeinsam mit einer Identifikationskennung der Speicherstelle im nicht exklusiven Datenbereich und einer Identifikationskennung des jeweiligen ersten instrumentierten Teilprogramms, in das zweite Ablaufprotokoll (20) übertragen wird;
wobei bei der Laufzeitrekonstruktion (4)
das zweite Ablaufprotokoll (20) vom Rekonstruktionssystem (18) analysiert wird,
wobei für jeden aufgezeichneten Lesezugriff eines zweiten instrumentierten Teilprogramms, in den aufgezeichneten Schreibzugriffen der anderen zweiten instrumentierten Teilprogramme eine Übereinstimmung des Datenwerts sowie der Identifikationskennung der Speicherstelle gesucht wird
und **durch** Auswertung der Identifikationskennung des zugeordneten Teilprogramms,
sowie aus geltenden Beschränkungsregeln für das Ausführungs-Zeitverhalten der Teilprogramme, insbesondere der den Teilprogrammen zugeordneten Ausführungsprioritäten,
eine Ausführungsreihenfolge der zweiten instrumentierten Teilprogramme derart ermittelt wird, dass die gelesenen Datenwerte eines jeden zweiten instrumentierten Teilprogramms mit zuletzt geschriebenen Datenwerten sämtlicher anderer zweiten instrumentierten Teilprogramme widerspruchsfrei übereinstimmen,
und ein drittes Ablaufprotokoll (45) generiert wird,
in welches in einer zeitlich hintereinander gelagerten Abfolge, die Datenwerte der Lesezugriffe entsprechend dem ersten Ablaufprotokoll (17) und zusätzlich Ablaufverzweigungsanweisungen, welche jeweils die Information über die ermittelte Ausführungsreihenfolge der zweiten instrumentierten Teilprogramme umfasst, eingetragen werden,
wobei in der Analysephase (5)
das dritte instrumentierte Steuerungsprogramm (15) auf einem Diagnosesystem (23) zur Ausführung gebracht wird,
wobei bei der Ausführung der Lese- und Schreib-Ablaufsteuerungsfunktionen der dritten instrumentierten Teilprogramme, sequentiell auf das dritte Ablaufprotokoll (45) zugegriffen wird, wobei:
- bei einer ermittelten Ablaufverzweigungsanweisung, die Kennung des betreffenden dritten instrumentierten Teilprogramms aus dem dritten Ablaufprotokoll (45) ausgelesen und ein Wechsel der Ausführung zu diesem Teilprogramm erzwungen wird;
- bei Ausführung der Lese-Ablaufsteuerungsfunktion der jeweils korrespondierende Datenwert aus dem dritten Ablaufprotokoll (45) ausgelesen und der jeweils zugeordneten Speicherstelle im nicht exklusiven Datenbereich zugewiesen wird,
wodurch eine Ausführungsreihenfolge hergestellt wird, welche die selbe Datenkausalität wie der Programmlauf während der Echtzeit-Aufzeichnungsphase (2) aufweist.

2. Verfahren nach Anspruch 1, **dadurch gekennzeichnet, dass** das erste instrumentierten Steuerungsprogramm (13) unter Echtzeitbedingungen ausgeführt wird, wobei die Teilprogramme (8) im Wesentlichen eigenständig und nebenläufig ausgeführt werden und wobei die zeitliche Zuteilung einer Ausführungseinheit (16) des Laufzeitsystems (6) zur Ausführung der Teilprogramme (8) abhängig von den, den Teilprogrammen jeweils zugeordneten Ausführungsprioritäten und den Zeitpunkten des Eintretens von Startereignissen (32) erfolgt.

3. Verfahren nach Anspruch 2, **dadurch gekennzeichnet, dass** das erste instrumentierte Steuerungsprogramm (13) auf einer speicherprogrammierbaren Steuerung (SPS) für eine Maschine ausgeführt wird.

4. Verfahren nach einem der Ansprüche 1 bis 3, **dadurch gekennzeichnet, dass** bei der Programminstrumentierung (1) in jedes erste instrumentierte Teilprogramm zumindest eine Statusprotokollfunktion eingefügt wird, die bei Ausführung während der Echtzeit-Aufzeichnungsphase (2), Informationen über den Startzeitpunkt sowie gegebenenfalls über den Endzeitpunkt der Ausführung des jeweiligen ersten instrumentierten Teilprogramms in den exklusiv zugeordneten Zwischenspeicher schreibt.

5. Verfahren nach einem der Ansprüche 1 bis 4, wobei einem ersten instrumentierten Teilprogramm auch exklusive Datenbereiche zugeordnet sind, **dadurch gekennzeichnet, dass** während der Echtzeit-Aufzeichnungsphase (2) des ersten instrumentierten Steuerungsprogramms (13), periodisch eine Zustandssicherung initiiert wird, wobei ein zweiter Hintergrundprozess nach Erreichen des Endpunkts des ausgeführten ersten instrumentierten Teilprogramms, ein Speicherabbild dieser exklusiven Datenbereiche, zusammen mit einer Positionsmarkierung des ersten Ablaufprotokolls (17) in einen Zwischenspeicher kopiert.

6. Verfahren nach Anspruch 5, **dadurch gekennzeichnet, dass** zusammen mit dem Speicherabbild eine Sequenznummer gesichert wird.

7. Verfahren nach Anspruch 5 oder 6, wobei bei Ausführung des ersten instrumentierten Teilprogramm, bei dem Start- (9) bzw. Endpunkt (10) eine Start- (56) bzw. Endkennung (57) gesetzt wird, **dadurch gekennzeichnet, dass** nach Ende der Speicherung des Speicherabbilds die Start- (56) und Endkennung (57) des Teilprogramms verglichen wird und bei fehlerhafter Übereinstimmung, das Speicherabbild verworfen wird.

8. Verfahren nach Anspruch 5 oder 6, wobei bei Ausführung des ersten instrumentierten Teilprogramms (13), bei dem Start- (9) bzw. Endpunkt (10) eine Start- (56) bzw. Endkennung (57) gesetzt wird, **dadurch gekennzeichnet, dass** nach Ende der Speicherung des Speicherabbilds die Start- (56) und Endkennung (57) des Teilprogramms verglichen wird und bei Übereinstimmung, das Speicherabbild in ein Statusprotokoll übertragen wird.

9. Verfahren nach einem der Ansprüche 5 bis 8, **dadurch gekennzeichnet, dass** unmittelbar nach Beendigung des Programmlaufs eines ersten instrumentierten Teilprogramms eine Synchronisationsnachricht an den zweiten Hintergrundprozess gesendet wird, durch welche eine Überprüfung des verstrichenen Zeitintervalls seit der letzten durchgeführten Sicherung des Speicherabbildes dieses Teilprogramms erfolgt und bei Überschreitung einer vorgegebenen Zeitspanne eine erneute Sicherung initiiert wird.

10. Verfahren nach einem der Ansprüche 5 bis 9, **dadurch gekennzeichnet, dass** bei der Datenrekonstruktion (3) ein Startzeitpunkt innerhalb der Aufzeichnungszeit des ersten Ablaufprotokolls (17) für die Ausführung des zweiten instrumentierten Steüerungsprogramms festgelegt wird und die für den Startzeitpunkt letztgültigen Speicherabbilder der einzelnen instrumentierten Teilprogramme aus dem Statusprotokoll geladen werden.

11. Verfahren nach Anspruch 10, **dadurch gekennzeichnet, dass** jeweils vor Beginn der Ausführung eines zweiten instrumentierten Teilprogramm die jeweilige Leseposition im ersten Ablaufprotokoll (17) anhand der zugeordneten Positionsmarkierung des geladenen Speicherabbildes festgelegt wird.

12. Verfahren nach einem der Ansprüche 1 bis 11, **dadurch gekennzeichnet, dass** die Echtzeit-Aufzeichnung (2) ständig während der Ausführung des ersten instrumentierten Steuerungsprogramms (13) durchgeführt wird.

13. Verfahren nach einem der Ansprüche 1 bis 12, **dadurch gekennzeichnet, dass** bei der Programminstrumentierung (1), eine Auswahl der zu instrumentierenden Teilprogramme (8) erfolgt.

14. Verfahren nach einem der Ansprüche 1 bis 13, **dadurch gekennzeichnet, dass** bei der Programminstrumentierung (1) für die zweiten instrumentierten Teilprogramme bzw. das zweite instrumentierte Steuerungsprogramm (14) nur jene Schreibzugriffe auf solche nicht-exklusiven Datenbereiche ermittelt werden, auf welche jeweils von zumindest einem weiteren instrumentierten Teilprogramm lesend zugegriffen wird.

15. Verfahren nach einem der Ansprüche 1 bis 14, **dadurch gekennzeichnet, dass** im zweiten (14) und/oder dritten (15) instrumentierten Steuerungsprogramm, die jeweils nicht instrumentierten Teilprogramme als nicht ausführbar gekennzeichnet werden.

16. Verfahren nach einem der Ansprüche 1 bis 15, **dadurch gekennzeichnet, dass** das erste Ablaufprotokoll (17) in einen nichtflüchtigen Speicher mit großer Kapazität übertragen wird.

17. Verfahren nach einem der Ansprüche 1 bis 16, **dadurch gekennzeichnet, dass** in der Echtzeit-Aufzeichnungsphase (2) für jedes erste instrumentierte Teilprogramm der jeweilige Zwischenpuffer in ein jeweils eigenständiges erstes Ablaufprotokoll übertragen wird.

18. Verfahren nach einem der Ansprüche 1 bis 17, **dadurch gekennzeichnet, dass** bei der Übertragung des Inhalts des Zwischenpuffers in das erstes Ablaufprotokoll (17) eine verlustfreie Datenkompression durchgeführt wird.

19. Verfahren nach Anspruch 1 oder einem der Ansprüche 5 bis 18, **dadurch gekennzeichnet, dass** der erste und/oder zweite Hintergrundprozess mit einer Priorität ausgerührt werden, die unter der Ausführungspriorität der einzelnen Teilprogramme liegt.

20. Verfahren nach einem der Ansprüche 1 bis 19, **dadurch gekennzeichnet, dass** bei der Datenrekonstruktion (3) für jede Lese-Wiedergabefunktion und jede Schreib-Aufzeichnungsfunktion, zusätzlich eine eindeutige Kennung der Lese- bzw. Schreiboperation in das zweite Ablaufptokoll (20) übertragen wird.

21. Verfahren nach einem der Ansprüche 1 bis 20, **dadurch gekennzeichnet, dass** in der Analysephase (5) in regelmäßigen Laufzeitabständen ein gemeinsames Zustandsabbild aller instrumentierten dritten Teilprogramme erstellt wird.

22. Verfahren nach einem der Ansprüche 1 bis 21, **dadurch gekennzeichnet, dass** die automatische Programminstrumentierung (1), die Daten- (3) und Laufzeitrekonstruktion (4) und die Analysephase (5), auf zumindest einem, vom Laufzeitsystem (6) unterschiedlichen Computersystem durchgeführt wird.

## Claims

1. A method for selectively recording, reconstructing and analysing a program run of a control program (7), which control program (7) is executed on a runtime-system (6), wherein the control program (7) comprises a plurality of completed partial programs (8), and a partial program (8) is formed of a start point (9) and an endpoint (10) with program flow instructions (11) arranged in between,
wherein each partial program (8) has non-exclusive data areas assigned to it, for which write-access is performed by at least one further partial program and/or an external process,
**characterised by** the following steps:
program instrumentation (1), real-time recording phase (2), data reconstruction (3),
runtime reconstruction (4) and analysing phase (5),
wherein during program instrumentation (1)
all read- and write-accesses to non-exclusive data areas are automatically ascertained, respectively, by a development system (12) for several partial programs (8) of the control program (7), the partial programs having to be instrumented, and respectively,
- a first instrumented partial program is generated in that each ascertained read-access is replaced by a read-recording function, and
a first instrumented control program (13) is formed in that the respective partial program to be instrumented is replaced by the first instrumented partial program;
- a second instrumented partial program is generated in that each ascertained read-access is replaced by a read-playback function
and each ascertained write-access is replaced by a write-recording function, and
a second instrumented control program (14) is formed in that the respective partial program to be instrumented is replaced by the second instrumented partial program;
- a third instrumented partial program is generated in that each ascertained read- or write-access is replaced by a read or write flow control function, and
a third instrumented control program (15) is formed in that the respective partial program to be instrumented is replaced by the third instrumented partial program;
wherein during the real-time recording phase (2)
the first instrumented control program (13) is executed on the runtime system (6),
and wherein, when executing the read-recording function the read data value is copied into an intermediate buffer exclusively assigned to the respective first partial program and the content of the intermediate buffer is cyclically transferred together with an unequivocal identifier of the assigned first instrumented partial program into a first flow trace (17) by a first background process;
wherein during data reconstruction (3)
the first flow trace (17) is transferred by the runtime system (6) to a reconstruction system (18),
and the second instrumented control program (14) is executed on the reconstruction system (18), wherein when a specific second instrumented partial program is executed,
- for each read-playback function
- the data value is ascertained from a corresponding data value from the first flow trace (17)
- and is transferred together with an identification code of the storage location in the non-exclusive data area and an identification code of the respective instrumented partial program into a second flow trace (20),
- for each write-recording function
- the data value is transferred together with an identification code of the storage location in the non-exclusive data area and an identification code of the respective first instrumented partial program into the second flow trace (20);
wherein during runtime reconstruction (4)
the second flow trace (20) is analysed by the reconstruction system (18),
wherein for each recorded read access of a second instrumented partial program a search is performed in the recorded write-accesses of the other second instrumented partial programs for a match of the data value and the identification code of the storage location and, through evaluating the identification code of the assigned partial program as well as from valid constraint rules for the execution-time-response of the partial programs, in particular from the execution priorities assigned to the partial programs,
an execution sequence of the second instrumented partial programs is ascertained such that the read data values of each second instrumented partial program consistently match the latest written data values of all other second instrumented partial programs,
and a third flow trace (45) is generated,
into which the data values of the read-accesses are entered one after the other in chronological order in accordance with the first flow trace (17) and additionally with flow-branching instructions, which respectively encompass the information on the ascertained execution sequence of the second instrumented partial programs,
wherein in the analysis phase (5)
the third instrumented control program (15) is brought to execution on a diagnosis system (23),
wherein during execution of the read and write flow control functions of the third instrumented partial programs the third flow trace (45) is sequentially accessed,
wherein:
- for an ascertained flow-branching instruction the identifier of the respective third instrumented partial program is read out from the third flow trace (45) and execution is forced to change over to this partial program;
- for an execution of the read flow control function the respective corresponding data value is read out from the third flow trace (45) and assigned to the respectively assigned storage location in the non-exclusive data area,
whereby an execution sequence is produced, which comprises the same data causality as the program run during the real-time recording phase (2).

2. The method according to claim 1, **characterised in that** the first instrumented control program (13) is executed under real-time conditions, wherein the partial programs (8) are, in the main, executed independently and concurrently and wherein temporal allocation of an execution unit (16) of the runtime system (6) for executing the partial programs (8) is effected in dependence of the execution priorities respectively assigned to the partial programs and the times at which starting events (32) occur.

3. The method according to claim 2, **characterised in that** the first instrumented control program (13) is executed on a programmable logic controller (SPS) for a machine.

4. The method according to one of claims 1 to 3, **characterised in that** during program instrumentation (1) at least one status protocol function is inserted into each first instrumented partial program, which during execution of the real-time recording phase (2), writes information about the start time and, as required, the end time of the execution of the respective first instrumented partial program into the exclusively assigned intermediate buffer.

5. The method according to one of claims 1 to 4, wherein a first instrumented partial program also has exclusive data areas assigned to it, **characterised in that** during the real-time recording phase (2) of the first instrumented control program (13) a status save is periodically initiated, wherein a second background process, after reaching the end point of the executed first instrumented partial program, copies a memory image of these exclusive data areas together with a position marker of the first flow trace (17) into an intermediate buffer.

6. The method according to claim 5, **characterised in that** a sequence number is saved together with the memory image.

7. The method according to claim 5 or 6, wherein during execution of the first instrumented partial program a start identifier (56) or end identifier (57) is placed at the start point (9) or end point (10) **characterised in that**, once storing of the memory image has been completed, the start identifier (56) and end identifier (57) of the partial program are compared and, if the match is faulty, the memory image is discarded.

8. The method according to claim 5 or 6, wherein during execution of the first instrumented partial program (13) a start identifier (56) or end identifier (57) is placed at the start point (9) or end point (10), **characterised in that**, once storing of the memory image has been completed, the start identifier (56) and end identifier (57) of the partial program are compared and, if they match, the memory image is transferred into a status protocol.

9. The method according to one of claims 5 to 8, **characterised in that** immediately upon completing the program run of the first instrumented partial program a synchronisation message is sent to the second background process, which message is used to check the time interval elapsed since the last executed save of the memory image of this partial program, and if the predefined time span was exceeded a new save is initiated.

10. The method according to one of claims 5 to 9, **characterised in that** during data reconstruction (3) a start time is fixed within the recording time of the first flow trace (17) for executing the second instrumented control program and the latest memory images of individual instrumented partial programs valid at the starting time are loaded from the status protocol.

11. The method according to claim 10, **characterised in that** prior to each start of execution of a second instrumented partial program the respective read position in the first flow trace (17) is fixed by way of the assigned position marker of the loaded memory image.

12. The method according to one of claims 1 to 11, **characterised in that** the real-time recording (2) is carried out continually during execution of the first instrumented control program (13).

13. The method according to one of claims 1 to 12, **characterised in that** the partial programs (8) to be instrumented are selected during program instrumentation (1).

14. The method according to one of claims 1 to 13, **characterised in that** during program instrumentation (1) for the second instrumented partial programs or the second instrumented control program (14), only those write-accesses to those non-exclusive data areas are ascertained, for which read-access is performed by respectively at least one further instrumented partial program.

15. The method according to one of claims 1 to 14, **characterised in that** in the second (14) and/or third (15) instrumented control program the respective non-instrumented partial programs are marked as non-executable.

16. The method according to one of claims 1 to 15, **characterised in that** the first flow trace (17) is transferred into a non-volatile large-capacity memory.

17. The method according to one of claims 1 to 16, **characterised in that** in the real-time recording phase (2) for each first instrumented partial program, the respective intermediate buffer is transferred into an independent first flow trace, respectively.

18. The method according to one of claims 1 to 17, **characterised in that** a loss-free data compression is carried out during transfer of the content of the intermediate buffer into the first flow trace (17).

19. The method according to claim 1 or one of claims 5 to 18, **characterised in that** the first and/or the second background process are carried out with a priority, which lies below the execution priority of individual partial programs.

20. The method according to one of claims 1 to 19, **characterised in that** during data reconstruction (3) for each read-playback function and each write-recording function an unequivocal identifier of the read- or write operation is additionally transferred into the second flow trace (20).

21. The method according to one of claims 1 to 20, **characterised in that** in the analysis phase (5) a common status image of all instrumented third partial programs is created in regular runtime intervals.

22. The method according to one of claims 1 to 21, **characterised in that** automatic program instrumentation (1), data- (3) and runtime reconstruction (4) and the analysis phase (5) are carried out on at least one computer system which is different from the runtime system (6).

## Revendications

1. Procédé pour l'enregistrement, la reconstruction et l'analyse sélectifs du déroulement d'un programme de commande (7), lequel programme de commande (7) est exécuté sur un système d'exécution (6),
le programme de commande (7) comportant une pluralité de sous-programmes (8) finis, et un sous-programme (8) est formé par un point de départ (9) et un point final (10) avec des instructions de déroulement du programme (11) disposées entre lesdits deux points, à chaque sous-programme (8) étant associées des zones de données non exclusives, auxquelles accèdent pour écrire au moins un sous-programme supplémentaire et/ou un processus externe,
**caractérisé par** les étapes:
instrumentation des programmes (1), phase d'enregistrement en temps réel (2),
reconstruction des données (3), reconstruction du temps d'exécution (4) et phase d'analyse (5),
au cours de l'instrumentation des programmes (1)
sont déterminés automatiquement par un système de développement (12) pour plusieurs sous-programmes (8) du programme de commande (7) tous les accès de lecture et
d'écriture à des zones de données non exclusives et dans chaque cas
- un premier sous-programme instrumenté est généré en remplaçant chaque accès de lecture déterminé par une fonction d'enregistrement de lecture, et
un premier programme de commande (13) instrumenté est formé en remplaçant le sous-programme à instrumenter par le premier sous-programme instrumenté ;
- un deuxième sous-programme instrumenté est généré en remplaçant chaque accès de lecture déterminé par une fonction de reproduction de lecture,
et chaque accès d'écriture déterminé est remplacé par une fonction d'enregistrement d'écriture, et
un deuxième programme de commande (14) instrumenté est formé en remplaçant le sous-programme respectif à instrumenter par le deuxième sous-programme instrumenté;
- un troisième sous-programme instrumenté est généré en remplaçant chaque accès de lecture ou chaque accès d'écriture par une fonction de commande de déroulement de lecture ou d'écriture, et
un troisième programme de commande (15) instrumenté est formé en remplaçant le sous-programme respectif à instrumenter par le troisième sous-programme instrumenté ;
au cours de la phase d'enregistrement en temps réel (2)
le premier programme de commande (13) instrumenté est exécuté sur le système d'exécution (6),
et au cours de l'exécution de la fonction d'enregistrement de lecture, la valeur de donnée lue est copiée dans une mémoire tampon associée exclusivement au premier sous-programme concerné,
et le contenu de la mémoire tampon est transféré, conjointement avec une clé univoque du premier sous-programme instrumenté associé, cycliquement par un premier processus en arrière-plan vers un premier protocole de déroulement (17) ;
au cours de la reconstruction des données (3)
le premier protocole de déroulement (17) est transféré depuis le système d'exécution (6) vers un système de reconstruction (18),
et le deuxième programme de commande (14) instrumenté est exécuté sur le système de reconstruction (18), et pendant l'exécution d'un deuxième sous-programme spécifique instrumenté
- pour chaque fonction de reproduction de lecture
- la valeur de donnée est déterminée à partir d'une valeur de donnée correspondante issue du premier protocole de déroulement (17),
- et est transférée dans un deuxième protocole de déroulement (20) conjointement avec une clé d'identification de l'espace mémoire dans la zone de données non exclusive et une clé d'identification du sous-programme instrumenté concerné,
- pour chaque fonction d'enregistrement d'écriture
- la valeur de donnée est transférée dans le deuxième protocole de déroulement (20) conjointement avec une clé d'identification de l'espace mémoire dans la zone de données non exclusive et une clé d'identification du premier sous-programme instrumenté concerné;
au cours de la reconstruction du temps d'exécution (4)
le deuxième protocole de déroulement (20) est analysé par le système de reconstruction (18), et pour chaque accès de lecture enregistré d'un deuxième sous-programme instrumenté, une concordance de la valeur de donnée, ainsi que de la clé d'identification de l'espace mémoire étant recherchée dans les accès d'écriture enregistrés des autres deuxièmes sous-programmes instrumentés,
et par l'analyse de la clé d'identification du sous-programme associé, ainsi qu'à partir des règles de restriction en application pour le comportement du temps d'exécution des sous-programmes, en particulier les priorités d'exécution associées aux sous-programmes,
est déterminée une séquence d'exécution des deuxièmes sous-programmes instrumentés,
de telle sorte que les valeurs de données lues de chaque deuxième sous-programme instrumenté concordent sans contradiction avec les valeurs de données écrites en dernier lieu de tous les autres deuxièmes sous-programmes instrumentés,
et un troisième protocole de déroulement (45) est généré,
dans lequel sont enregistrées, dans une suite disposée successivement dans le temps, les valeurs de données des accès de lecture conformément au premier protocole de déroulement (17) et, en plus, des instructions de ramification du déroulement qui contiennent chacune l'information sur la séquence d'exécution déterminée des deuxièmes sous-programmes instrumentés;
au cours de l'analyse de phase (5)
le troisième programme de commande (15) instrumenté est amené à se dérouler sur un système de diagnostic (23),
au moment de l'exécution des fonctions de commande de déroulement de lecture et
d'écriture des troisièmes sous-programmes instrumentés, se produit séquentiellement un accès au troisième protocole de déroulement (45),
- lors d'une instruction de ramification de déroulement déterminée, la clé du troisième sous-programme instrumenté concerné est lu à partir du troisième protocole de déroulement (45) et un changement de l'exécution vers ce sous-programme est forcé ;
- lors de l'exécution de la fonction de commande du déroulement de lecture, la valeur de donnée respectivement correspondante est lue à partir du troisième protocole de déroulement (45) et l'espace mémoire respectivement associé dans la zone de données non exclusive lui est attribué,
moyennant quoi il est établi une séquence d'exécution qui comporte la même causalité de données que le déroulement du programme pendant la phase d'enregistrement en temps réel (2).

2. Procédé selon la revendication 1, **caractérisé en ce que** le premier programme de commande (13) instrumenté est exécuté dans des conditions de temps réel, les sous-programmes (8) étant exécutés sensiblement de manière autonome et secondaire et l'attribution temporelle d'une unité d'exécution (16) du système d'exécution (6) pour l'exécution des sous-programmes (8) étant effectuée en fonction des priorités d'exécution associées respectivement aux sous-programmes et en fonction des instants d'intemention des événements de lancement (32).

3. Procédé selon la revendication 2, **caractérisé en ce que** le premier programme de commande (13) instrumenté est exécuté sur une commande à mémoire programmable (SPS) pour une machine.

4. Procédé selon l'une quelconque des revendications 1 à 3, **caractérisé en ce que** pendant l'instrumentation des programmes (1), au moins une fonction de protocole d'état est insérée dans chaque premier sous-programme instrumenté, laquelle fonction, lors de l'exécution pendant la phase d'enregistrement en temps réel (2), écrit dans la mémoire tampon exclusivement associée, des informations sur le moment de départ, ainsi que, le cas échéant, sur le moment final de l'exécution du premier sous-programme instrumenté concerné.

5. Procédé selon l'une quelconque des revendications 1 à 4, dans lequel des zones de données exclusives sont également associées à un premier sous-programme instrumenté, **caractérisé en ce que** pendant la phase d'enregistrement en temps réel (2) du premier programme de commande (13) instrumenté, une sécurité d'état est initiée périodiquement, un deuxième processus en arrière-plan copiant dans une mémoire tampon, lorsque le point final du premier sous-programme instrumenté exécuté est atteint, une image mémoire de ces zones de données exclusives conjointement avec un repère de position du premier protocole de déroulement (17).

6. Procédé selon la revendication 5, **caractérisé en ce qu'**un numéro de séquence est sécurisé conjointement avec l'image mémoire.

7. Procédé selon la revendication 5 ou 6, dans lequel pendant l'exécution du premier sous-programme instrumenté, dans lequel une clé de départ (56) et une clé de fin (57) sont placées près du point de départ (9) et du point final (10), **caractérisé en ce qu'**à la fin de la mémorisation de l'image mémoire, la clé de départ (56) et la clé de fin (57) du sous-programme sont comparées et, en cas de non-concordance, l'image mémoire est rejetée.

8. Procédé selon la revendication 5 ou 6, dans lequel pendant l'exécution du premier sous-programme (13) instrumenté, dans lequel une clé de départ (56) et une clé de fin (57) sont placées près du point de départ (9) et du point final (10), **caractérisé en ce qu'**à la fin de la mémorisation de l'image mémoire, la clé de départ (56) et la clé de fin (57) du sous-programme sont comparées et, en cas de concordance, l'image mémoire est transférée dans un protocole d'état.

9. Procédé selon l'une quelconque des revendications 5 à 8, **caractérisé en ce que** directement à la fin du déroulement d'un premier sous-programme instrumenté, un message de synchronisation est envoyé vers le deuxième processus en arrière-plan, à la suite de quoi est effectué un contrôle de l'intervalle de temps écoulé depuis la dernière sauvegarde effectuée de l'image mémoire de ce sous-programme, et une nouvelle sauvegarde est initiée si cet intervalle de temps est supérieur à un intervalle de temps prédéfini.

10. Procédé selon l'une quelconque des revendications 5 à 9, **caractérisé en ce que** pendant la reconstruction des données (3), un moment de départ est défini à l'intérieur du temps d'enregistrement du premier protocole de déroulement (17) pour l'exécution du deuxième programme de commande instrumenté, et les images mémoires valides en dernier pour le moment de départ, des différents sous-programmes instrumentés sont chargées à partir du protocole d'état.

11. Procédé selon la revendication 10, **caractérisé en ce que**, dans chaque cas, avant le début de l'exécution d'un deuxième sous-programme instrumenté, la position de lecture respective dans le premier protocole de déroulement (17) est définie à l'appui du repère de position associé de l'image mémoire chargée.

12. Procédé selon l'une quelconque des revendications 1 à 11, **caractérisé en ce que** la phase d'enregistrement en temps réel (2) est mise en oeuvre en permanence pendant l'exécution du premier programme de commande (13) instrumenté.

13. Procédé selon l'une quelconque des revendications 1 à 12, **caractérisé en ce que** pendant l'instrumentation des programmes (1), il est effectué une sélection des sous-programmes (8) à instrumenter.

14. Procédé selon l'une quelconque des revendications 1 à 13, **caractérisé en ce que** pendant l'instrumentation des programmes (1) pour les deuxièmes sous-programmes instrumentés ou le deuxième programme de commande (14) instrumenté, seuls sont déterminés les accès d'écriture à de telles zones de données non exclusives, auxquelles accède pour lire respectivement au moins un autre sous-programme instrumenté.

15. Procédé selon l'une quelconque des revendications 1 à 14, **caractérisé en ce que** dans le deuxième (14) et/ou le troisième (15) programme de commande instrumenté, les sous-programmes respectivement non instrumentés sont caractérisés comme non exécutables.

16. Procédé selon l'une quelconque des revendications 1 à 15, **caractérisé en ce que** le premier protocole de déroulement (17) est transféré dans une mémoire non volatile avec une grande capacité.

17. Procédé selon l'une quelconque des revendications 1 à 16, **caractérisé en ce que** dans la phase d'enregistrement en temps réel (2), pour chaque premier sous-programme instrumenté, la mémoire tampon respective est transférée dans un premier protocole de déroulement respectivement autonome.

18. Procédé selon l'une quelconque des revendications 1 à 17, **caractérisé en ce qu'**une compression des données sans perte est effectuée pendant le transfert du contenu de la mémoire tampon dans le premier protocole de déroulement (17).

19. Procédé selon la revendication 1 ou selon l'une quelconque des revendications 5 à 18, **caractérisé en ce que** le premier et/ou le deuxième processus en arrière-plan sont exécutés avec une priorité qui est inférieure à la priorité d'exécution des différents sous-programmes.

20. Procédé selon l'une quelconque des revendications 1 à 19, **caractérisé en ce que** pendant la reconstruction des données (3) pour chaque fonction de reproduction de lecture et chaque fonction d'enregistrement d'écriture, une clé univoque de l'opération de lecture et d'écriture est transférée, en plus, dans le deuxième protocole de déroulement (20).

21. Procédé selon l'une quelconque des revendications 1 à 20, **caractérisé en ce que** dans la phase d'analyse (5) est établie, à des intervalles de temps d'exécution réguliers, une image d'état commune de tous les troisièmes sous-programmes instrumentés.

22. Procédé selon l'une quelconque des revendications 1 à 21, **caractérisé en ce que** l'instrumentation automatique des programmes (1), la reconstruction des données (3) et la reconstruction du temps d'exécution (4) et la phase d'analyse (5) sont mises en oeuvre sur au moins un système d'ordinateur différent du système d'exécution (6).
